(19) **Europäisches Patentamt / European Patent Office / Office européen des brevets**

(11) **EP 1 875 388 B1**

(12) **EUROPEAN PATENT SPECIFICATION**

(45) Date of publication and mention
of the grant of the patent:
**05.05.2010 Bulletin 2010/18**

(51) Int Cl.:
***G06F 17/30*** (2006.01)

(21) Application number: **06732487.1**

(22) Date of filing: **26.04.2006**

(86) International application number:
**PCT/JP2006/309185**

(87) International publication number:
**WO 2006/118310 (09.11.2006 Gazette 2006/45)**

(54) **CLASSIFICATION DICTIONARY UPDATING APPARATUS, COMPUTER PROGRAM PRODUCT THEREFOR AND METHOD OF UPDATING CLASSIFICATION DICTIONARY**

KLASSIFIKATIONSWÖRTERBUCH-AKTUALISIERUNGSVORRICHTUNG, COMPUTERPROGRAMMPRODUKT DAFÜR UND VERFAHREN ZUM AKTUALISIEREN EINES KLASSIFIKATIONSWÖRTERBUCHS

ASPPAREIL DE MISE A JOUR DE DICTIONNAIRE DE CLASSIFICATION, PRODUIT-PROGRAMME INFORMATIQUE ASSOCIE ET PROCEDE DE MISE A JOUR DE DICTIONNAIRE DE CLASSIFICATION

(84) Designated Contracting States:
**DE FR GB**

(30) Priority: **27.04.2005 JP 2005130209**

(43) Date of publication of application:
**09.01.2008 Bulletin 2008/02**

(73) Proprietor: **KABUSHIKI KAISHA TOSHIBA**
**Tokyo 105-8001 (JP)**

(72) Inventor: **WANG, Lan,**
**c/o Intellectual Property Division**
**Minato-ku,**
**Tokyo 105-8001 (JP)**

(74) Representative: **Maury, Richard Philip**
**Marks & Clerk LLP**
**90 Long Acre**
**London**
**WC2E 9RA (GB)**

(56) References cited:
- **PIERRA G: "Intelligent electronic component catalogues for engineering and manufaturing" PROCEEDINGS OF THE INTERNATIONAL SYMPOSIUM ON GLOBAL ENGINEERING NETWORKING, 23 April 1997 (1997-04-23), - 24 April 1997 (1997-04-24) pages 1-21, XP002386880 Antwerp, Belgium**
- **CHOCHON J ET AL: "Reducing parts diversity in product design: a data centered approach" PROCEEDINGS OF CONCURRENT ENGINEERING, SPECIAL TRACK DATA INTEGRATION IN ENGINEERING, [Online] 26 July 2003 (2003-07-26), - 30 July 2003 (2003-07-30) pages 311-318, XP002392643 Madeira, Portugal Retrieved from the Internet: URL:http://www.lisi.ensma.fr/ftp/pub/docum ents/papers/2003/2003-CE2003-Chochon.pdf> [retrieved on 2006-07-28]**
- **SARDET E ET AL: "Formal Specification, Modelling and Exchange of Classes of Components according to PLIB. A case study" PROCEEDINGS OF THE INTERNATIONAL SYMPOSIUM ON GLOBAL ENGINEERING NETWORKING GEN, 23 April 1997 (1997-04-23), pages 1-24, XP002213807**

**Description**

TECHNICAL FIELD

The present invention relates to an apparatus, a computer program product, and a method for updating a classification dictionary.

This application is based upon and claims the benefit of priority from the prior Japanese Patent Application No. 2005-130209, filed on Apr. 27, 2005; the entire contents of which are incorporated herein by reference.

BACKGROUND ART

A hierarchical database, which is exemplified by an object-oriented database (OODB) and an object relational database (ORDB), has a hierarchical structure in which sub classes inherit properties of upper classes. In such a hierarchical database, the number of properties of the sub classes increases with successions from the upper classes. The successions of the properties of the upper classes to the sub classes are generally called "inheritance", the feature of which is described, for example, in "Object-Oriented Concepts, Databases, and Applications", edited by Won Kim, 1989, ACM Press.

In the OODB, a unit of classification of one level is generally called a "class". On the other hand, in the ORDB, a table that permits the inheritance corresponds to the class in the OODB. Between the tables with a hierarchical relation, the properties are inherited from upper tables to sub tables, in other words, header information of a column constituting an upper table is inherited to a sub table. Data having the same type of property and belonging to a certain class of each level is called an "instance", and a collection thereof is called a "population". The population of data is usually stored in a structure called table in a relational database (RDB) or an ORDB. A string of properties making up a table is called a header of the table.

One known hierarchical database is defined by ISO13584 Parts Library Standard (hereinbelow simply referred to as "PLIB" standard), which is an international standard for implementing an electronic catalogue system which electronically providing product information. The "PLIB" standard is an international standard consisting of a plurality of "Parts" and defines a manner of object-oriented description of products library data or parts library data and a semantics for file exchange, in other words, defines what kind of terms, manner of description, and data type are to be employed. Part 42 (Part Issue No. 42) of the PLIB has same contents with the IEC61360-2 (Part Issue No. 2). The standard classifies products in an object-oriented manner, clarifies a group of properties characterizing each class, and realizes a file exchange of the contents corresponding to the class, and therefore, the concept of property inheritance is naturally incorporated herein. Further, since the standard is formulated based on the ISO6523 "Structure for Identification of organizations and organization parts," with the use of the International Code Designator (ICD) defined by ISO 6523, in particular, an internationally unique identifier can be allocated to each property.

In recent years, systems based on the PLIB standard are proposed, for example, in Japanese Patent Application

Laid-Open No. 2004-177996, and Japanese Patent Application Laid-Open No. 2004-178015.

The PLIB standard defines the data exchange format according to a basic concept that the technological information of products should be represented by "dictionary" and "contents." Here, "dictionary" is a hierarchical classification dictionary that has a hierarchical structure where a sub level inherits a property of an upper level. Such a hierarchical classification dictionary is formed from a class that defines the hierarchical structure, a property that is defined for the class, and a field (also referred to as an attribute) that represents a class and property.

Various tools and systems are provided for building such hierarchical classification dictionary. For example, PLIB-EDITOR, a dictionary building tool provided by LISI-ENSMA of France (see http://www.plib.ensma.fr/), is representative as described in "Reducing parts diversity in product design: a data centered approach" by Chochon et al..

DISCLOSURE OF INVENTION

The PLIB-EDITOR tool, however, does not have a function to accept an update proposal such as edition of or addition to the dictionary. The update proposal (for editing and adding) to the hierarchical classification dictionary is separately evaluated and assessed (so that comment and balloting are given to the proposal) based on experiences of a dictionary manager and a dictionary domain expert, and it is determined whether the proposal is accepted or rejected. When the update proposal (for editing and adding) is determined to be accepted, the hierarchical classification dictionary can be corrected via the PLIB-EDITOR.

The dictionary manager and the dictionary domain expert evaluate an update proposal (for editing and adding) of the hierarchical classification dictionary and determine whether the update proposal is to be accepted, or rejected, for example, whenever the update proposal is made, and such procedure is not efficient.

According to one aspect of the present invention, a classification dictionary updating apparatus includes an update proposal receiving unit that receives a proposal for updating a hierarchical classification dictionary which has a hierarchical structure which includes a class that defines the hierarchical structure, a property that defines a hierarchical class structure, and an attribute that is a detailed information field of the class and the property, and in which a sub classification class inherits a property of an upper classification class; a proposal history storing unit that stores the past received proposal; an approximate proposal extracting unit that extracts the past received proposal stored by the proposal history storing unit approximate to the latest received proposal; and an approximate proposal presenting unit that presents the extracted proposal.

According to another aspect of the present invention, a computer program product having a computer readable medium including computer-executable programmed instructions for updating a classification dictionary, wherein the instructions, when executed by a computer, cause the computer to perform receiving a proposal for updating a hierarchical classification dictionary which has a hierarchical structure which includes a class that defines the hierarchical structure, a property that defines a hierarchical class structure, and an attribute that is a detailed information field of the class and the property, and in which a sub classification class inherits a property of an upper classification class; storing the received proposal; extracting a proposal approximate to the received proposal from the proposals already stored; and presenting the extracted proposal.

According to still another aspect of the present invention, a method of updating a classification dictionary, includes receiving a proposal for updating a hierarchical classification dictionary which has a hierarchical structure which includes a class that defines the hierarchical structure, a property that defines a hierarchical class structure, and an attribute that is a detailed information field of the class and the property, and in which a sub classification class inherits a property of an upper classification class; storing the received proposal; extracting a proposal approximate to the received proposal from the proposals already stored; and presenting the extracted proposal.

BRIEF DESCRIPTION OF DRAWINGS

FIG. 1 shows a structure of a hierarchical classification dictionary, which is a basis of embodiments;
FIG. 2 shows a structure of a hierarchical classification dictionary utilizing a simple tree based on PLIB standard;
FIG. 3 shows a dictionary revising-rule relating to a class;
FIG. 4 shows a dictionary revising-rule relating to a property;
FIG. 5 is a schematic diagram of a structure of a system including a classification dictionary updating apparatus according to a first embodiment;
FIG. 6 is a diagram of a module structure of a server;
FIG. 7 is a block diagram of a schematic structure of the system including the server;
FIG. 8 shows a structure of a property addition proposal;
FIG. 9 shows a structure of a class addition proposal;
FIG. 10 shows a structure of an edition proposal;
FIG. 11 is a flowchart of a search of an approximate proposal;
FIG. 12 is an explanatory diagram of an example of an approximate proposal list of the class edition proposal;
FIG. 13 shows an approximate proposal list of the property addition proposal;
FIG. 14 is a flowchart of a process sequence of a search of an approximate proposal of a class addition proposal Cx, based on a property included in Cx;
FIG. 15 is an explanatory diagram of a search of an approximate proposal according to an approximate proposal searching method 3;
FIG. 16 is a plan view of an advice given to a dictionary manager;
FIG. 17 is a flowchart of a proposal evaluation; and
FIG. 18 is a flowchart of a pre-simulation of a proposal draft according to a second embodiment.

BEST MODE(S) FOR CARRYING OUT THE INVENTION

A hierarchical classification dictionary employed in an electronic catalogue system that electronically provides product information will be first described. The hierarchical classification dictionary is a basis for embodiments.

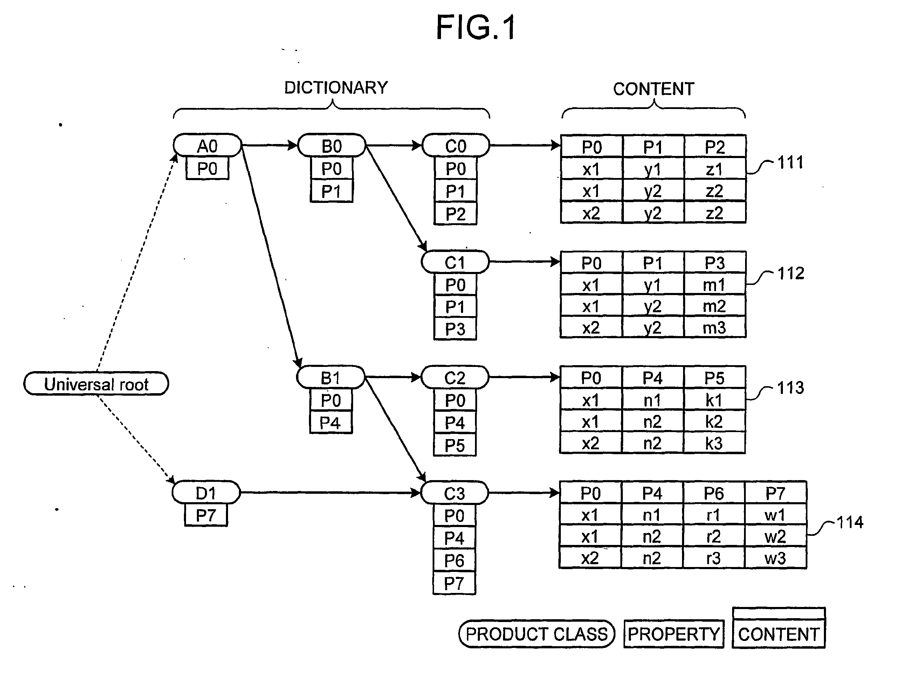

FIG. 1 shows a structure of a hierarchical classification dictionary. The hierarchical classification dictionary shown in FIG. 1 is a hierarchical database divided into plural levels. Each level has one or more classification items, and sub levels inherit properties of upper levels. Hence, the properties of the classification items in a sub level succeed the properties of the classification items in an upper level. Here, each of the hierarchical classification items is called class, and each class has its own properties. The hierarchical classification dictionary shown in FIG. 1 indicates a general inter-class property inheriting relation including a multiple inheritance. The classes are represented by A0, B0, B1, C0, C1, C2, C3, and D1, whereas the properties are represented by P0 to P7. The class C3 inherits the properties P0 and P4 from the parent class B1, while inheriting the property P7 from another parent class D1. The property P6 is uniquely defined in the class C3. The class A0 and the class D1 are independent classes. A universal root is an overarching class which hypothetically includes all root classes. The universal root may correspond to what is generally called a "universal set" in mathematics. Since the overarching class has no unique property and no property to be inherited, the overarching class can be treated as a parent class of any root class.

PLIB standard (ISO13584 Parts Library), which is an international standard for implementing an electronic catalogue system that electronically provides product information, employs a simple tree structure as a hierarchical structure for classification of products and properties thereof. Hence, there is only one upper class (parent class). When the property of class other than the parent class is to be inherited, a special structure is employed for an import (citation) of a property called "Case Of". This structure can be regarded as a modified version of the multiple inheritance of FIG. 1, in other words, a structure in which a tree is divided into a main line and a sub-line, the main line being formed from a parent class with a smallest number and the sub-line being given an alternate name "Case Of." In the ORDB or a general object-oriented database, not all the tables and classes have a parent table or a parent class. However, the table and the class which exists independently can be connected to a hypothetical "universal root" as shown in FIG. 1, so that all classes can be traced back to a single root, the feature of which can be similarly found in the simple tree structure.

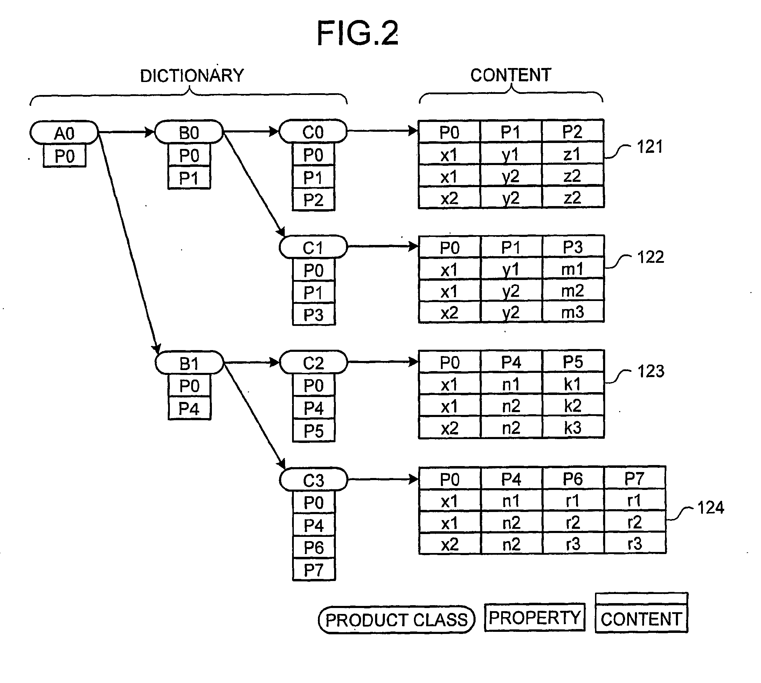

FIG. 2 shows a structure of a hierarchical classification dictionary employing a simple tree structure based on the PLIB standard. The hierarchical classification dictionary shown in FIG. 2 based on the PLIB standard does not have a universal root. In FIG. 2, a portion including A0, B0, B1, C0, C1, C2, and C3 of the tree structure represents information including classification levels. In the embodiment, the tree is a simple tree, and the class has only one upper class.

In FIG. 2, the class A0 has sub classes B0 and B1. The class B0 has sub classes C0 and C1, whereas the class B1 has sub classes C2 and C3. Each product class has a property item and the property of an upper class is inherited to a sub class. In FIG. 2, contents 121, 122, 123, and 124 are actual product data. For example, the content 121 is product data of the C0. The content 121 includes content data of three types. More specifically, the content 121 includes property values x1 and x2 of a property item P0, property values y1 and y2 of a property item P1, and property values z1 and z2 of a property item P2.

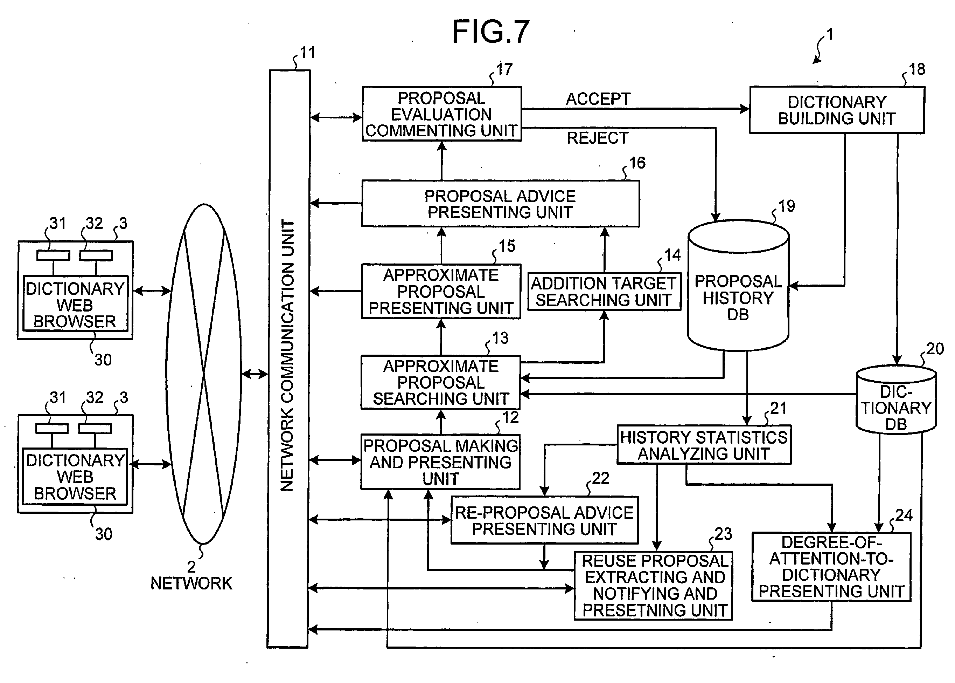

The hierarchical classification dictionary as mentioned above is stored as a processed object of the embodiment in a dictionary DB 20 (see FIG. 7) described later. The manipulation on contents 121 to 124, which are actual content data, is not within the scope of the present invention. The contents 111 to 114 of FIG. 1 have similar characteristics with contents 121 to 124 of FIG. 2.

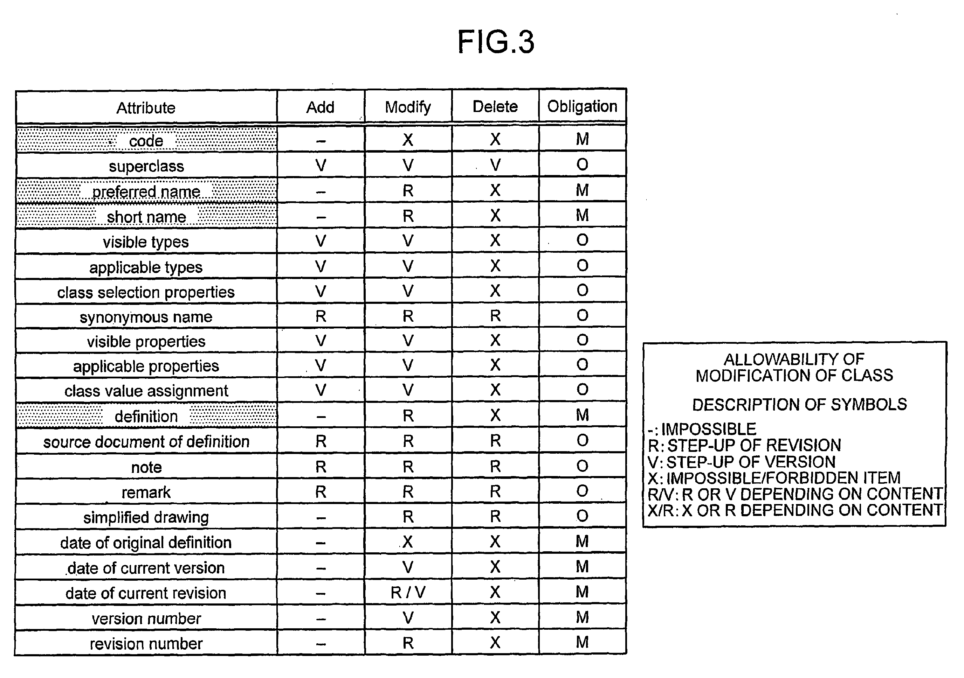

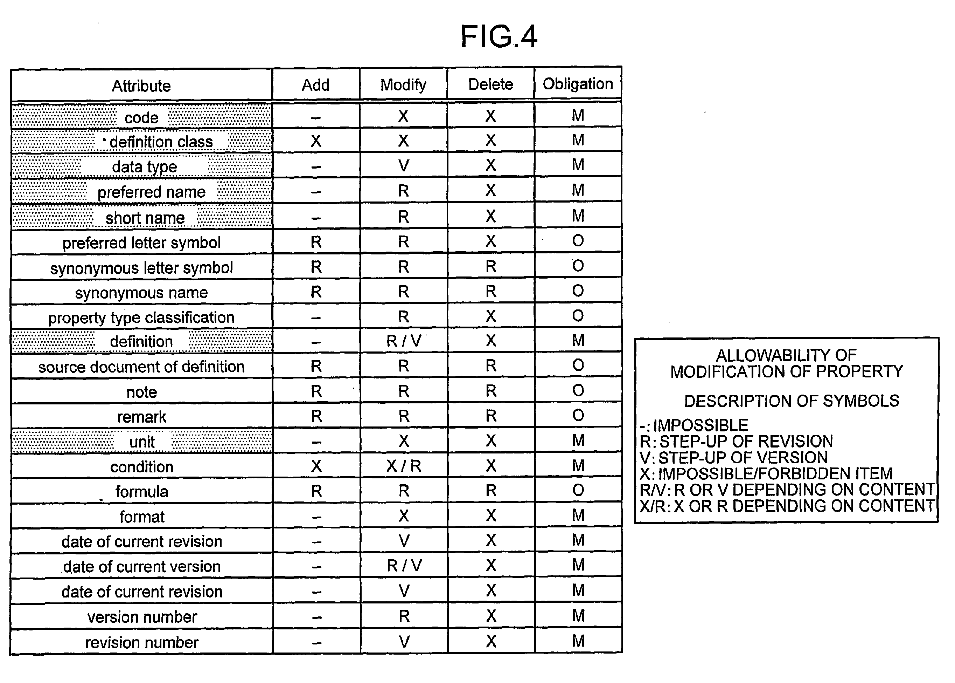

The class and the property of the dictionary are defined by respective attributes. Here, "attribute" means an information field employed to define detailed information of each class and property. To avoid confusion between the "property" of the class and the "attribute", the detailed information fields of the class and the property will be referred to as the "attribute" in the description. For each class, as shown in FIG. 3, attributes such as a class type (class type), a class name (code), a parent class (superclass), and a standard name (preferred name) are defined. For a property, as shown in FIG. 4, attributes such as a property code (code), a definition class (definition class), a data type (data type), and a standard name (preferred name) are defined.

The attributes define the class and the property based on the PLIB definition thereby determining a format of the content, whether the content can be edited or not (as indicated by "Add," "Modify", and "Delete" in FIGS. 3 and 4); whether the content is mandatory or optional (as indicated by "Obligation" in FIGS. 3 and 4), or the like.

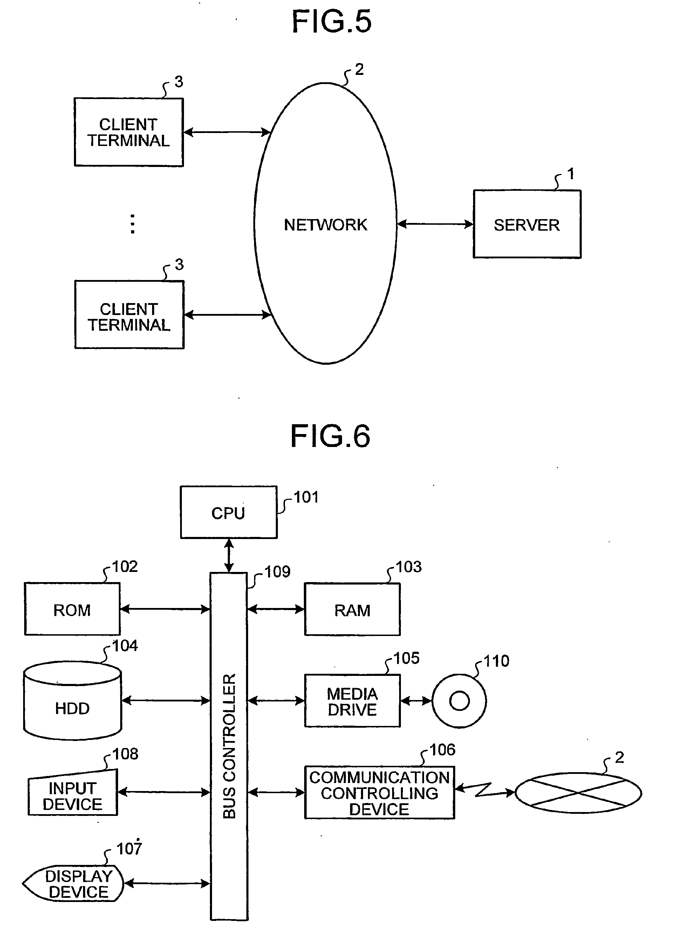

Next, a first embodiment will be described in detail. FIG. 5 is a schematic diagram of an example of a structure of a system including a classification dictionary updating apparatus according to the first embodiment. The system, as shown in FIG. 5, is assumed to be a server-client system where a server computer 1 (hereinafter simply referred to as a server) which is a classification dictionary updating apparatus, is connected to plural client computers 3 (hereinafter simply referred to as client terminals) which are terminal devices via a network 2 such as a Local Area Network (LAN) or the like.

The client terminal 3 is a general personal computer, for example, and includes a dictionary WEB browser 30, a display device 31, and an input device 32 (see FIG. 7). By utilizing the dictionary WEB browser 30, the client terminal 3 can formulate and provide an updating proposal p (for editing and adding) for the current dictionary database (DB) 20 (see FIG. 7) in the server 1 via the network 2.

FIG. 6 is a diagram of a module structure of the server 1. The server 1 includes a central processing unit (CPU) 101 which performs information processing, a read only memory (ROM) 102 which stores BIOS or the like and is a dedicated memory for reading out, a random access memory (RAM) 103 which rewritably stores various data, a hard disk drive (HDD) 104 which functions as various databases and stores various programs, a media drive 105, such as a CD-ROM drive, which serves to store information, externally distribute information, and externally acquire information, using a storing medium 110, a communication controlling device 106 that serves to transmit information to/from other external computer via the network 2, a display device 107 such as a cathode ray tube (CRT), or a liquid crystal display (LCD) that displays condition of processing and results of processing to an operator, and an input device 108, such as a keyboard or a mouse, which serves to receive input such as a command or information from the operator to supply the same to the CPU 101, and the data transmitted among the respective units are arbitrated by a bus controller 109.

When the power of the server 1 is turned on by the user, the CPU 101 starts up a program called loader inside the ROM 102, to read out an operating system (OS) which is a program for managing a hardware and a software of the computer from the HDD 104 to the RAM 103, and starts up the OS. The OS serves to activate a program, read in information, and store information according to a manipulation by the user. Known typical OS are, for example, Windows (registered trademark), and UNIX (registered trademark). A program running on the OS is called an application program. The application program is not limited to those running on a predetermined OS and may be a program that let the OS execute a part of various processing described later. Still alternatively, the application program may be included in a group of program files making up a predetermined application software or an OS.

Here, the server 1 stores the classification dictionary updating program in the HDD 104 as an application program. In this sense, the HDD 104 functions as a storing medium that stores the classification dictionary updating program.

A program installed in the HDD 104 of the server 1 is generally recorded in the storing medium 110 such as an optical disk such as a CD-ROM, or a DVD, various magnetooptical disk, various magnetic disk such as a flexible disk, a media of various recording schemes such as a semiconductor memory, and the program stored in the storing medium 110 is installed into the HDD 104. Here, a portable storing medium 110 such as an optical information recording medium such as a CD-ROM, or a magnetic media such as an FD can be employed as a storing medium that stores a classification dictionary updating program. Further, the classification dictionary updating program may be taken in from outside via the communication controlling device 106, for example, and installed into the HDD 104.

When the classification dictionary updating program running on the OS is started up, the server 1 follows the classification dictionary updating program, and the CPU 101 executes various operations to collectively control the respective units. Among the various operations executed by the CPU 101 of the server 1, characteristic processing of the first embodiment will be described below.

FIG. 7 is a block diagram of a schematic structure of a system including the server 1. As shown in FIG. 7, the server 1 follows the classification dictionary updating program, and includes a network communication unit 11, a proposal formulating and presenting unit 12, an approximate proposal searching unit 13, an addition target searching unit 14, an approximate proposal presenting unit 15, a proposal advice presenting unit 16, a proposal evaluation commenting unit 17, a dictionary building unit 18, a proposal history DB 19 which is a proposal history storing unit, a dictionary DB 20 which is a hierarchical classification dictionary, a history statistics analyzing unit 21, a re-proposal advice presenting unit 22, a reuse proposal extracting and notifying and presenting unit 23, and a degree-of-attention-to-dictionary presenting unit 24. Hereinbelow, functions of the respective units will be described.

When the server 1 receives an updating proposal p (for editing and adding) via the network communication unit 11, the approximate proposal searching unit 13 searches the proposal history DB 19 for an approximate proposal. Approximate proposals found as a result of search are displayed by the approximate proposal presenting unit 15. When the proposal p is a proposal to add a new item, the addition target searching unit 14 searches for an addition target to advise to the proposal p. The proposal advise presenting unit 16 refers to the approximate proposal displayed by the approximate proposal presenting unit 15 and the result of search for the addition target by the addition target searching unit 14, and provides a comment, an evaluation, and an addition target of the proposal p to a dictionary manager as a piece of advice. When the proposal p is an edition proposal to the current item, the addition target searching unit 14 does not need to search for the addition target, and the proposal advise presenting unit 16 does not need to provide advice on the addition target. The proposal evaluation commenting unit 17 actually provides an evaluation and a comment on the proposal p. Here, there are two types of result of evaluation, i.e., "reject" and "accept". When the result of evaluation of the proposal p is "reject," the proposal p is stored in the proposal history DB 19 as it is, whereas when the result of evaluation of the proposal p is "accept", the proposal p is stored in the proposal history DB 19, and at the same time the proposal p is built into the dictionary DB 20 by the dictionary building unit 18. The history statistics analyzing unit 21 provides statistics and analysis of the history of the proposal history DB 19. The degree-of-attention-to-dictionary presenting unit 24 presents a degree of attention of the dictionary (proposal history DB 19, dictionary DB 20) according to the history statistics and the result of analysis by the history statistics analyzing unit 21. For example, an item with a high degree of attention is shown in a different color. Further, the reuse proposal extracting and notifying and presenting unit 23 extracts a proposal to reuse, notify the proposer of the reuse, and presents a proposal to reuse, according to the history statistics and result of analysis by the history statistics analyzing unit 21. The proposer refers to the "advice for re-proposal" provided by the re-proposal advice presenting unit 22, and re-edits or formulates a proposal by the proposal formulating and presenting unit 12.

Here, the re-edition or the formulation of the proposal may be performed from the dictionary WEB browser 30 of the client terminal 3, and the proposal formulating and presenting unit 12 may be structured only to present the proposal. Alternatively, the formulation of the proposal may be realized locally so that the formulated proposal is provided to the server 1 via the network communication unit 11, and the proposal formulating and presenting unit 12 may be structured only to present the proposal.

Next, characteristic functions of the respective units of the server 1 will be described in detail.

A request of addition and modification of the class and the property of the dictionary to the dictionary DB 20 which is a hierarchical classification dictionary is called "update proposal" in the present invention. The proposal history according to the first embodiment includes information such as a recorded proposal, a comment thereon, and an evaluation thereto, and is stored in the proposal history DB 19.

The proposals to the dictionary DB 20 can be classified into two groups, i.e., a class proposal and a property proposal. Each of a group of class proposals and a group of property proposals includes two types of proposals, i.e., an addition proposal and an edition proposal.

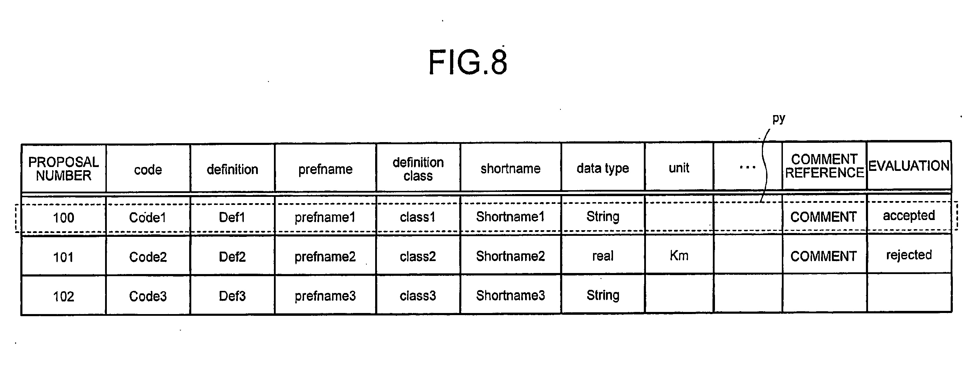

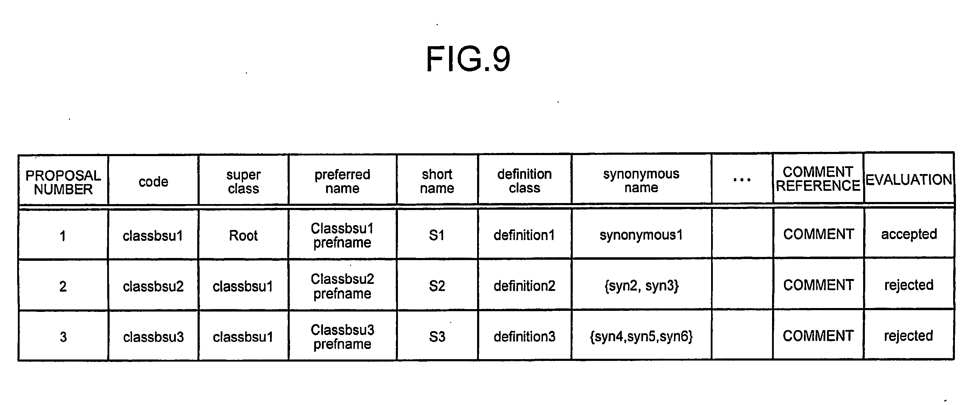

First, the addition proposal will be described. The property addition proposal includes, as shown in the exemplary structure in FIG. 8, mandatory contents of attributes of the property, and contents of a comment reference and an evaluation which are added to the proposal after the submission of the proposal. When the proposal is the class addition proposal, the proposal needs to include mandatory contents of attributes of the class as shown in an exemplary structure of FIG. 9.

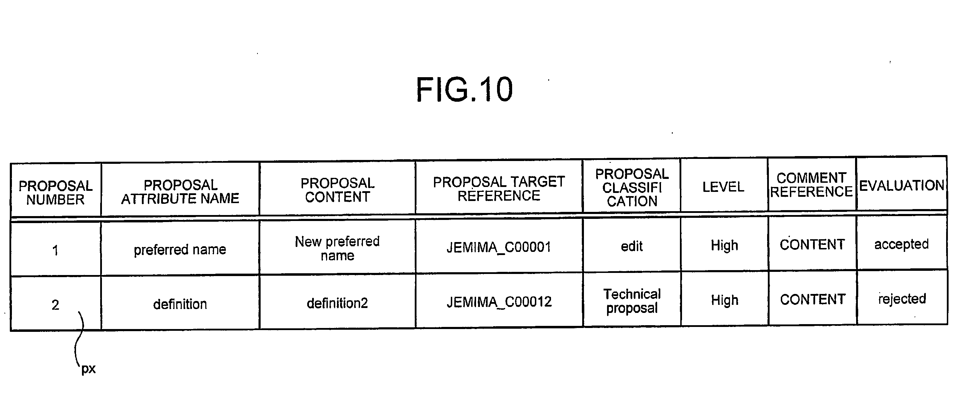

The edition proposal will be described. The edition proposal has a format as shown in FIG. 10. The format includes information of "proposal number", "proposal attribute", "proposal content", and "proposal target reference", and information determined later based on the content of the proposal, such as "proposal classification", "proposal level", "comment reference", and "evaluation". The class edition proposal can be made for each class. The property edition proposal cannot be edited and manipulated but from the class where the property is defined. In FIG. 2, the property P1 is defined in the class B0. The property P1 is inherited by the sub classes C0 and C1 of the class B0. The edition of the property P1 is rejected in the C0 and C1 and permitted only in the B0.

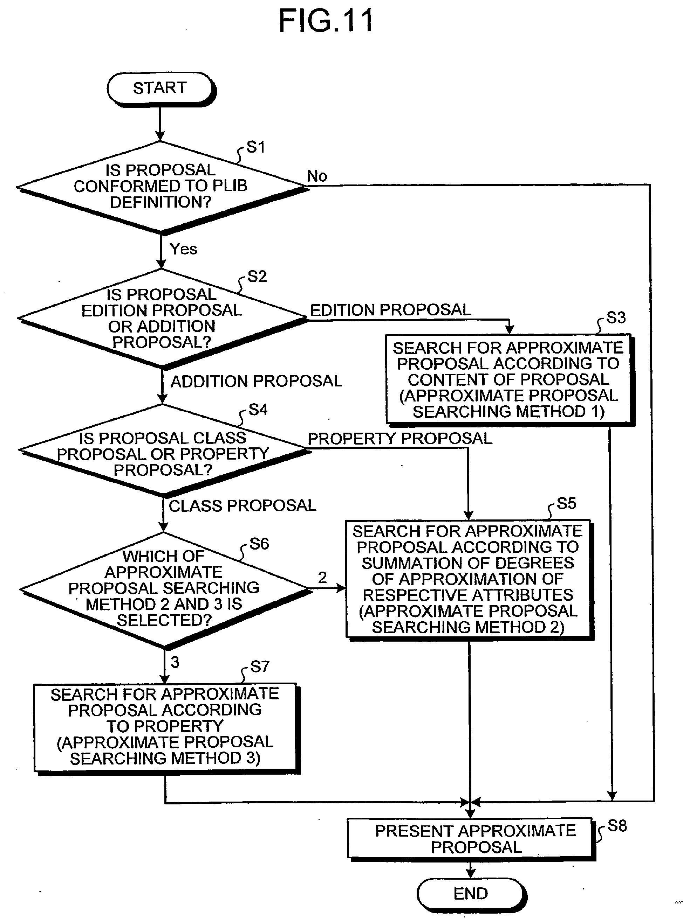

A search of the proposal history DB 19 for the approximate proposal by the approximate proposal searching unit 13, and a presentation of the result of search of the approximate proposal by the approximate proposal presenting unit 15 will be described with reference to a flowchart of FIG. 11.

First in step S1, a format of an input proposal is checked. In the format check, each proposal is examined with respect to a permitted character, a symbol, and a maximum number of characters for each attribute and checked if the proposal follows the definition of PLIB.

When the proposal is determined to have a format based on the definition of PLIB (Yes in step S1), the process proceeds to step S2, where it is determined whether the proposal is the "addition proposal" or the "edition proposal."

When the proposal is determined to be the edition proposal, the process proceeds to step S3, where the approximate proposal is searched according to "a technique of searching for an approximate proposal based on a content of proposal" (hereinafter referred to as "approximate proposal searching method 1").

On the other hand, when the proposal is determined to be the addition proposal, the process proceeds to step S4, where it is determined whether the proposal is the "class proposal" or the "property proposal".

When the proposal is determined to be the property addition proposal, the process proceeds to step S5 where the approximate proposal is searched for based on "a technique of searching the approximate proposal according to the sum of the degrees of approximation of respective attributes (referred to as "approximate proposal searching method 2")".

When the proposal is determined to be the class addition proposal, the process proceeds to step S6, where one of the approximate proposal searching method 2 and the approximate proposal searching method 3 is selected. The approximate proposal searching method 3 is a technique to search the approximate proposal based on the property information of the class proposal. When the approximate proposal searching method 2 is selected, the process proceeds to step S5, whereas when the approximate proposal searching method 3 is selected, the process proceeds to step S7.

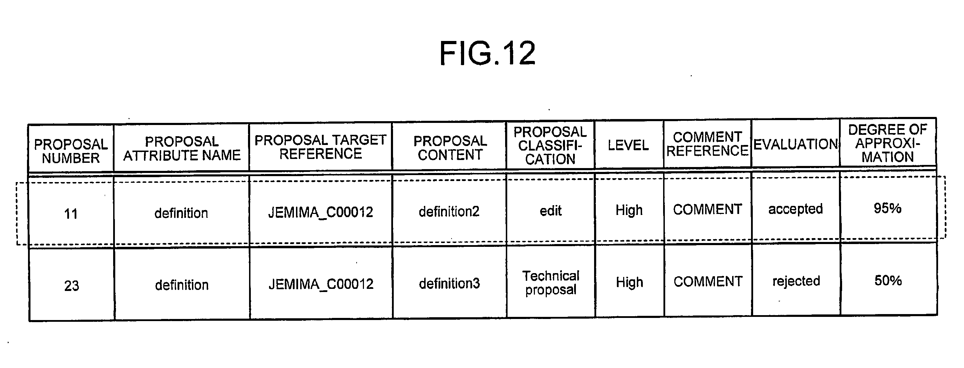

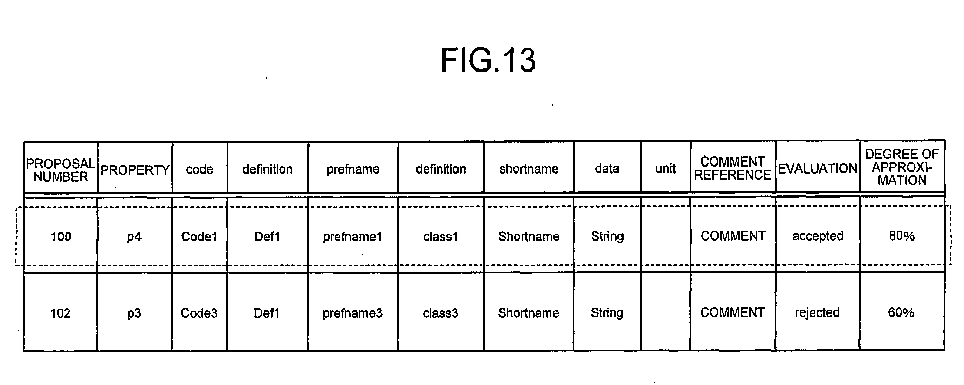

The approximate proposal found as a result of search is presented in step S8. The approximate proposal includes a content of proposal, a proposal evaluation, information on a comment on the proposal, and information on a degree of approximation which is a result of calculation of the degree of approximation. FIG. 12 is an example of an approximate proposal list of the class edition proposal, whereas FIG. 13 is an example of an approximate proposal list of a property addition proposal.

Next, the approximate proposal searching methods 1, 2, and 3 are described in detail below.

Description of Approximate Proposal Searching method 1

The approximate proposal searching method 1 is a manner of search of the edition proposal. The proposal content is structured as shown in FIG. 10 as to include "proposal number", "proposal attribute name", "proposal content", "proposal target reference".

In the search for the approximate proposal, a proposal which has the same "proposal target reference", "proposal attribute name", and "proposal content" as the original proposal is searched for in the proposal history DB 19.

Here, let an existing history proposal be indicated by pi and the content of a proposal px be defined as:

```
px.proposal_attribute_name= definition;

px.proposal_target_reference = JEMIMA_C00012;

px.proposal_content = definition2,
```

a degree of approximation S(pi, px) of the existing history proposal pi and the proposal px can be calculated as:

```
S(pi,px)=(W₁S (proposal target reference) + W₂S
```

(proposal attribute name) + $W_3$S (proposal content))/$\Sigma W_i$ (i=1,2,3).

Hereinbelow, S(pi,px) will be simply denoted as S(p). The characters $W_1$ to $W_3$ represent weights to respective degrees of approximation, and setting may differ for each system. The value of S(p) is calculated according to the setting. For example, when the setting is $W_1 = 0.5$, $W_2 = 0.5$, and $W_3 = 10$, the value of S(p) is the list of {0, 0.02%, 1%, 50%, 55%, 91%, 95%, 100%}.

S(proposal target reference) indicates the degree of approximation of the proposal target reference of px and the proposal target reference of pi. When the condition "px.proposal_target_reference = pi.proposal_target_reference" is satisfied, the degree of approximation of the proposal target reference is "S(proposal target reference)=1". When the proposal target reference is not included in the edition proposal, the degree of approximation of the proposal target reference does not need to be found.

S(proposal attribute name) indicates the degree of approximation of the proposal attribute name of px and the proposal attribute name of pi. When the condition "px.proposal_attribute_name = pi.proposal_attribute_name" is satisfied, the degree of approximation of the proposal attribute is "S(proposal attribute name) = 1".

S(proposal content) indicates the degree of approximation of the proposal content of px and the proposal content of pi. When the condition "px.proposal_content = pi.proposal_content" is satisfied, the degree of approximation of the proposal content is "S(proposal content) = 1". The value of S(proposal content) can be determined to be one of {0, 0.5, 1} through the semantic factoring of the proposal content. When the value of S(proposal content) is determined to be 0.5, the proposal content of px and the proposal content of pi partially match with each other. The value assigned to S(proposal content) may be different from system to system.

When the value of S(p) is highest, pi is the history proposal with the highest degree of approximation with px. According to the first embodiment, the list of proposals with high degree of approximation to px is formed from history proposal pi with S(p) of equal to or higher than 50%. FIG. 12 shows the approximate proposal list of px. Description of Approximate Proposal Searching method 2

The approximate proposal searching method 2 is a manner of search for the approximate proposal to the addition proposal for adding a new item. The proposal content such as shown in FIG. 8. is required to include all mandatory attributes defined in PLIB standard of ISO13584 as shown in FIG. 3. and FIG. 4. The degree of approximation of the approximate proposal is the sum of the degrees of approximation of respective attributes. Note that, at the stage of proposal, the codes of the class and the property are not formally determined and hence, the degree of approximation of Code is not included in the calculation of the degree of approximation.

Here, a property addition proposal py shown in FIG. 8 will be described as an example. The degree of approximation S(pi, py) of the existing property proposal history pi and the proposal py is calculated as:

S(pi,py) = ($W_1$S (definition class) + $W_2$S(data type) + $W_3$S(preferred name) + $W_4$S(short name) + $W_5$S(definition) + $W_6$S(unit) + $W_7$S(preferred letter symbol) + $W_8$S(synonymous name) + $W_9$S(property type classification) + $W_{10}$S (source document of definition) + $W_{11}$S(note) + $W_{12}$S(remark) + $W_{13}$S(condition) + $W_{14}$S (formula) + $W_{15}$S (format)) /$\Sigma W_i$ (i = 1, 2, ..., 15). Here, S(definition class) indicates the degree of approximation of the definition class of the proposal py and the history proposal pi, and when the condition "pi.definition_class = py.definition_class" is satisfied, "S(definition class) = 1". "S" of other attributes are calculated similarly.

The attributes are classified into main attributes and sub-attributes depending on the degree of importance thereof. The main attribute is a mandatory attribute, whereas the mandatory attribute is not always a main attribute. For example, the main attributes of the property are "code", "definition class", "data type", "preferred name", "short name", "definition", and "unit" as shown in hatched portions of FIG. 4, and other attributes are sub-attributes. The main attributes of the class are "code", "preferred name", "short name", and "definition" as shown in hatched portions of FIG. 3, and other attributes are sub-attributes. The class of dictionary and the attribute of property can be changed or added, and the classification of the main attribute or the sub-attribute is also changeable.

When the degrees of approximation are summed up, different weights are assigned to the main attribute and the sub-attribute for calculation. In the above example, when the weights $W_1$ to $W_6$ to the main attributes are 10, whereas the weights $W_7$ to $W_{15}$ to the sub-attributes are 1, S(pi, py) can be represented as:

```
S(pi, py) = (10*S(definition class) + 10*S(data type) +

10*S(preferred name) + 10*S(short name) + 10*S(definition)

+ 10*S (unit) + 1*S(preferred letter symbol) +

1*S(synonymous name) + 1*S(property type classification) +

1*S(source document of definition) + 1*S(note) +

1*S(remark) + 1*S(condition) + 1*S(formula) +

1*S(format))/Σ(10*7+1*9).
```

When the value of S(p) is highest, pi is the proposal with the highest degree of approximation with py. FIG. 13 is an example of approximate proposal of the property addition proposal.

Description of Approximate Proposal Searching method 3

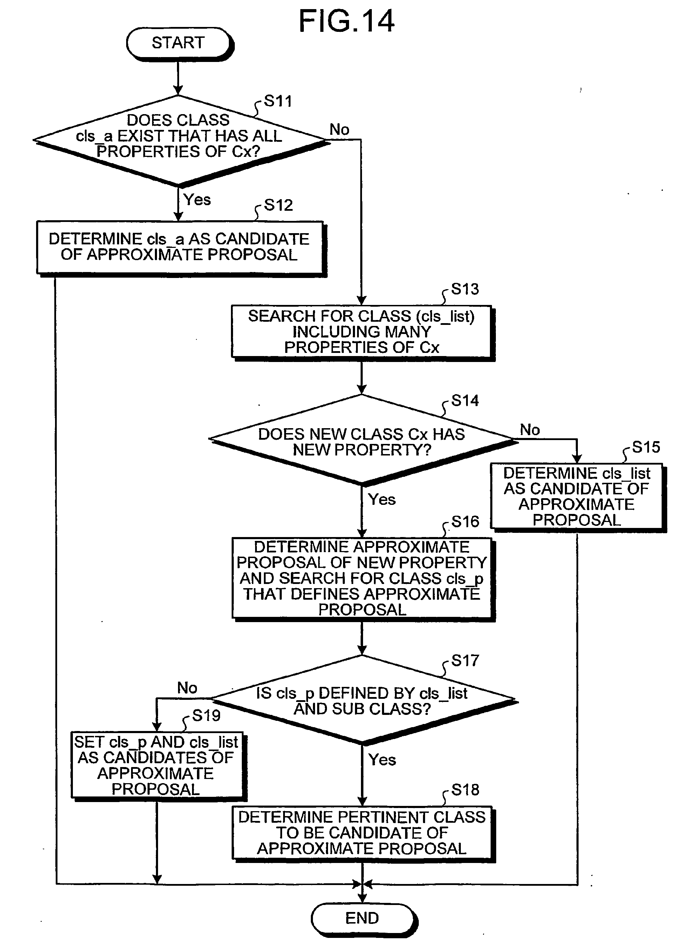

The approximate proposal searching method 3 is a manner of search for the approximate proposal according to the property of the class addition proposal. The approximate proposal searching method 3 will be described with reference to FIG. 14.

FIG. 14 is a flowchart of a process sequence for searching an approximate proposal of a class addition proposal Cx based on a property of the class addition proposal Cx. As shown in FIG. 14, in step S11, search is started from an upper level of the existing dictionary hierarchy, and it is checked whether a class (indicated hypothetically as cls_a) which has all the properties of Cx exists or not.

When the class with all the properties of Cx exists (Yes in step S11), cls_a is determined to be a candidate of the approximate proposal of the class addition proposal Cx (step S12).

When the class with all the properties of Cx does not exist (No in step S11), the process proceeds to step S13 where a class with largest number of properties of Cx is searched for (plural classes may be found hit as a result of search, and such a group of the hit classes is represented as cls_list), and it is determined whether there is a new property in properties of a new class Cx (step S14).

When the properties of the new class Cx is determined not to include a new one (No in step S14), in other words, when it is determined that the added property has not been defined, the process proceeds to step S15 where cls__list is determined to be the candidate of the approximate proposal.

On the other hand, when the properties of the new class Cx is determined to include a new property (Yes in step S14), in other words, when the added property is determined to have been defined, the process proceeds to step S16 where the approximate proposal to the new property is searched for and determined according to the above-described approximate proposal searching method 2, and a class (here hypothetically indicated as cls_p) which defines the approximate proposal is searched for and the process proceeds to step S17.

In step S17, it is examined whether the cls_p is defined by the class in cls_list which is the result of search in step S13, or by a sub class.

When it is determined that cls_p is defined by a class 1 in cls_list or by a class sub than the class 1 (Yes in step S17), the class 1 is determined to be the candidate of the approximate proposal of the added class Cx (step S18).

On the other hand, when it is determined that cls_p is not defined by a class in cls_list or by a sub class (No in step S17), cls_p and cls_list are determined to be the candidate of the approximate proposal of the added class proposal Cx (step S19).

The foregoing is the approximate proposal searching method 3 in which the approximate proposal is searched for according to the property of the class addition proposal.

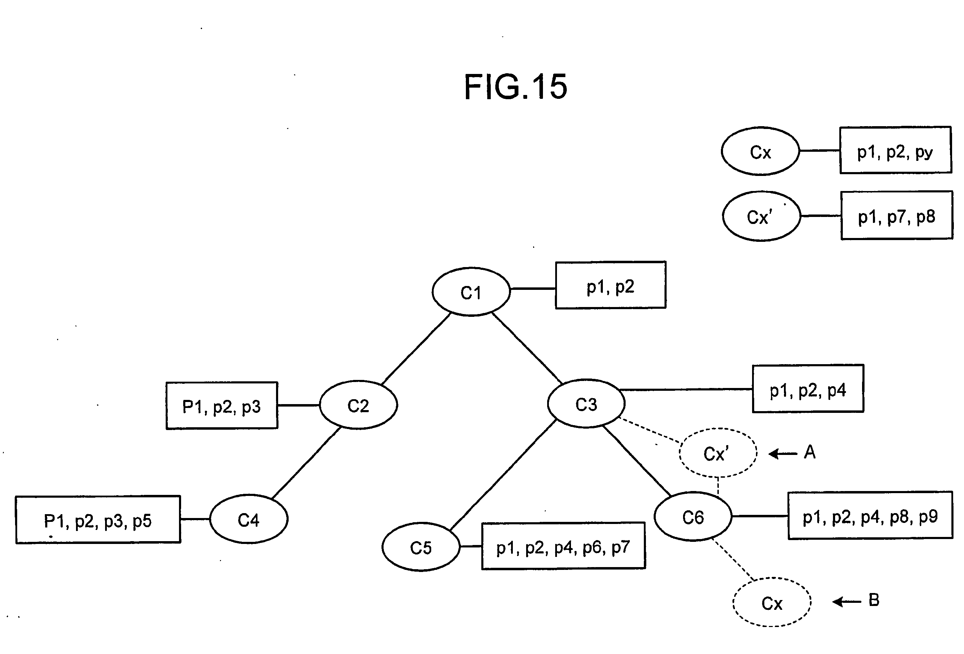

Next, an example of search for the approximate proposal of a new class Cx (p1, p2, py) of a dictionary shown in FIG. 15 according to the approximate proposal searching method 3 will be described.

The dictionary has classes from C1 to C6, each of which has defined properties. The new class Cx is made from a new property py which is defined by Cx and properties p1 and p2 inherited from the parent. In the first embodiment, the property of the new class Cx is whole or a part of the new property defined by Cx and the inherited properties. Among the properties of Cx, p1 and p2 are already defined properties, whereas py is a newly added property.

According to the process sequence shown in FIG. 14, since there is no class cls_a which includes all properties of Cx in step S11, the process proceeds to step S13. In step S13, the class list cls__list including properties p1 and p2 of the new class Cx is determined to be C1 and its sub classes C2 to C6.

Since Cx has the new property py (Yes in step S14), the process proceeds to step S16, and the approximate proposal of the new property py is searched for according to the approximate proposal searching method 2. For example, if the approximate proposal of py is p8, it can be determined that p8 is defined by C6 in step S17. As a result, the class C6 and its sub class (if there is one) are determined to be the candidates of the approximate proposal of the new class Cx in step S18.

Next, an example of search for the approximate proposal of the new class Cx' (p1, p7, p8) of the dictionary shown in FIG. 15 according to the approximate proposal searching method 3 will be described.

According to the process sequence shown in FIG. 14, since there is no class cls_a which includes all properties of Cx' in step S11, the process proceeds to step S13. In step S13, the list of the classes that include a large number of properties of the new class Cx' is found to be C5(p1,p7), C6(p1,p8).

Since the new class Cx' does not have the newly added property (No in step S14), the classes C5 and C6 are determined to be the candidates of the approximate proposal of the new class Cx' (step S15).

Thus, the approximate proposal of the proposal can be found via the search of the proposal history DB 19.

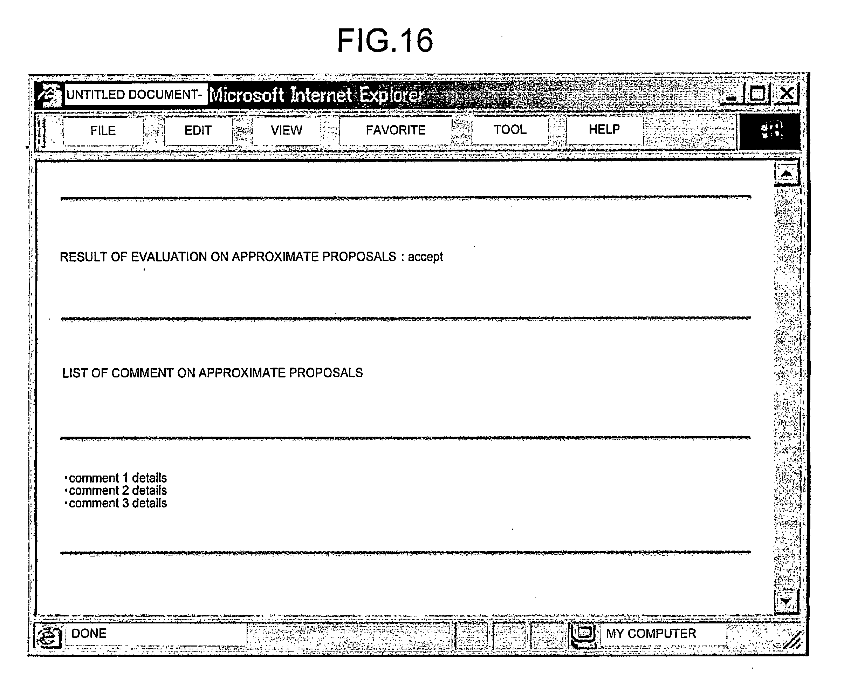

The approximate proposal thus found as a result of search is presented by the approximate proposal presenting unit 15. Further, a comment on and an evaluation of the proposal p, are presented together with the result of search for the addition target by the addition target searching unit 14 described later by the proposal advice presenting unit 16 as advice to the dictionary manager. FIG. 16 is an example of such advice to the dictionary manager.

When a new class is to be added, the approximate proposal is searched for via the approximate proposal searching method 2 and the approximate proposal searching method 3 as described above. The addition target searching unit 14 and the proposal advice presenting unit 16 provide advice on the target of the addition of new class proposal based on the location of the approximate proposal found as a result of search.

Here, a function of providing advice on the location where the addition proposal is to be added will be described, based on an example of the new class Cx (p1, p2, py) for the dictionary shown in FIG. 15.

When the class Cx to be added has a new property, a location where the new property py is to be added is first determined. For the determination of the location of py, the approximate proposal of py needs to be found via the approximate proposal searching method 2. For example, as described above, if the approximate proposal of py is p8, advice to be provided would be to add py to C6 which defines p8.

For more detail, it can be seen that the property of Cx is {p1,p2,py}, that is, {p1,p2,p8}. The class C6 which has three properties of Cx is a candidate of the approximate proposal of Cx. However, C6 also includes properties p4 and p9 which are not defined by Cx other than p1, p2, and p8. The property p4 is inherited from the parent class C3, and the property p9 is defined by C6. Then, the advice to be given on the location where Cx is to be added would be:

(1) A route A of FIG. 15. In other words, a child of the class C3 and a parent of the class C6. The properties of Cx are, then, {p1,p2,p4,p8};
(2) A route B of FIG. 15. In other words, a child of the class C6. The properties of the Cx are, then, {p1,p2,p4,p8,p9}. When the class C6 has other child class, C6 and other child classes of C6 are candidate class as addition target.

Here, Cx cannot be added as the "child of the class C1" or as the "child of the class C3". The property p8 which is newly defined by Cx is already defined by the class C6. If Cx is added as the "child of the class C1" or the "child of the class C3", the property p8 would be doubly defined. In the present invention, the property is regarded as being unique and not allowed to be doubly defined. Hence, Cx cannot be added as the "child of the class C1" or as the "child of the class C3", and also cannot be added to other locations where the same phenomena occurs.

The system recommends both A and B as the candidate location for the addition of Cx, and provides the information together with the properties Cx would have in each cases to the dictionary manager. The dictionary manager selects the location for the addition based on the candidate locations included in the advice.

Depending on the content of attribute defined by the class Cx, the approximate proposal found through search by the approximate proposal searching method 2 may be utilized for the advice on the addition target of Cx. First, the approximate proposal of Cx is searched for based on the content of the attribute defined by Cx according to the approximate proposal searching method 2. For example, if a proposal which is most approximate to Cx is C6, the property of Cx is compared with the property of the approximate proposal C6. According to the description, both A and B are suggested in the advice as the addition target of Cx.

The proposal evaluation commenting unit 17 actually provides an evaluation and a comment on the proposal p. The result of evaluation is given in one of two forms, i.e., "reject" and "accept".

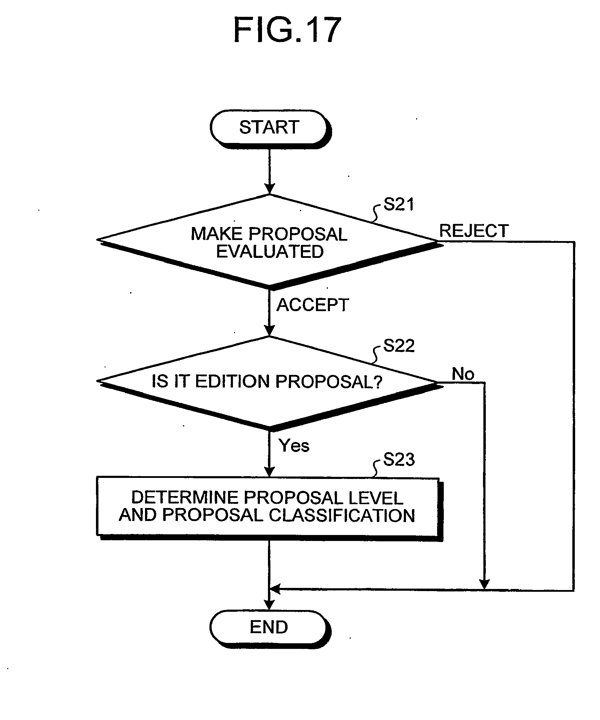

Here, FIG. 17 is a flowchart of a proposal evaluation. When the proposal advice presenting unit 16 described above provides evaluation and comment on the approximate proposal, the proposal evaluation commenting unit 17 let the dictionary manager evaluate the proposal as shown in FIG. 17 (step S21).

When the proposal is given an evaluation of "accept", the process proceeds to step S22, where it is determined whether the proposal is the edition proposal or the addition proposal.

When the proposal is determined to be the edition proposal (Yes in step S22), the process proceeds to step S23, and the level of the proposal (high, average) is automatically determined. The level of the proposal is determined such that when the attribute of the proposal is a main attribute, the proposal level is "high", whereas when the attribute of the proposal is a sub-attribute, the proposal level is "average". Further in step S23, the proposal is classified into "Edit (proposal on edition)" or "Technical proposal (proposal on technique)". The determination on the classification of the proposal, i.e., either "Edit" or "Technical proposal" is performed by the dictionary manager. The result of determination is recorded in a column of "proposal classification", "level", of each edition proposal as shown in FIG. 10.

On the other hand, when the proposal is not the edition proposal (No in step S22), i.e., when the proposal is the addition proposal, the proposal level and the proposal classification do not need to be determined.

The dictionary manager extracts a proposal to reuse based on the statistics and analysis of the history in the proposal history DB 19 by the history statistics analyzing unit 21, notifies the proposer of the reuse, and presents the proposal to reuse (reuse proposal extracting and notifying and presenting unit 23). More specifically, the dictionary manager searches the proposal history for the approximate proposal of the proposal px, and presents the search results in the order of the degree of approximation.

Further, the dictionary manager presents "advice on re-proposal" to the proposer (re-proposal advice presenting unit 22). In other words, the dictionary manager refers to the comment on the approximate proposal or the like, and provides comment on the proposal px. For example, the dictionary manager may refer to the comment and reach a conclusion that evaluation is "reject", yet the dictionary manager can provide comment as edition advice that the evaluation can be "accept" once certain content is changed. Such information as "re-proposal" of the proposal px and edition advice on the re-proposal are notified to the proposer via an electronic mail, or notified to the client terminal 3 of the proposer via the network 2, and clearly shown to the proposer. To highlight the notification, the pertinent proposal is shown in a different color, a different font, or the like. The proposer, on receiving the notification, sets out on the re-proposal.

Further, the dictionary manager can search for the approximate proposal of a proposal pr, which is a rejected proposal in the proposal history DB 19, in the same manner as described above, and determine whether the proposal pr is worth re-proposal or not with reference to the comment on the approximate proposal or the like. When it is determined that the proposal pr is worth "re-proposal," the fact that the proposal pr can be a "re-proposal" and the edition advice on the re-proposal are notified to the client terminal 3 of the proposer via the electronic mail or the network 2, and thus clearly shown to the proposer.

The degree-of-attention-to-dictionary presenting unit 24 presents the degree of attention to the dictionary (proposal history DB 19, dictionary DB 20) based on the history statistics and analysis result by the history statistics analyzing unit 21. Thus, based on the statistics of the "proposal target reference", the proposal target with more proposals can be known. Then, such a "proposal target" (class or property) is explicitly shown as an item with higher degree of attention in the dictionary (proposal history DB 19, dictionary DB 20). Further, the attribute with more "proposal attributes" is explicitly shown as an item with higher degree of attention. The item with a higher degree of attention may be shown in a different color, a different font, or the like. The manner of indication may differ from system to system.

Thus, according to the embodiment, the update proposal to the hierarchical classification dictionary is received and stored in the proposal history memory, while the past update proposals stored in the proposal history memory is searched for an approximate proposal similar to the received update proposal and the approximate proposal is extracted and presented. Thus, the approximate proposal of the updating proposal (for editing and adding) of the hierarchical classification dictionary can be presented with the use of an existing dictionary editing history, and the evaluation, such as accepted and rejected, of the updating proposal (for editing and adding) can be readily made, whereby an efficient dictionary building is allowed.

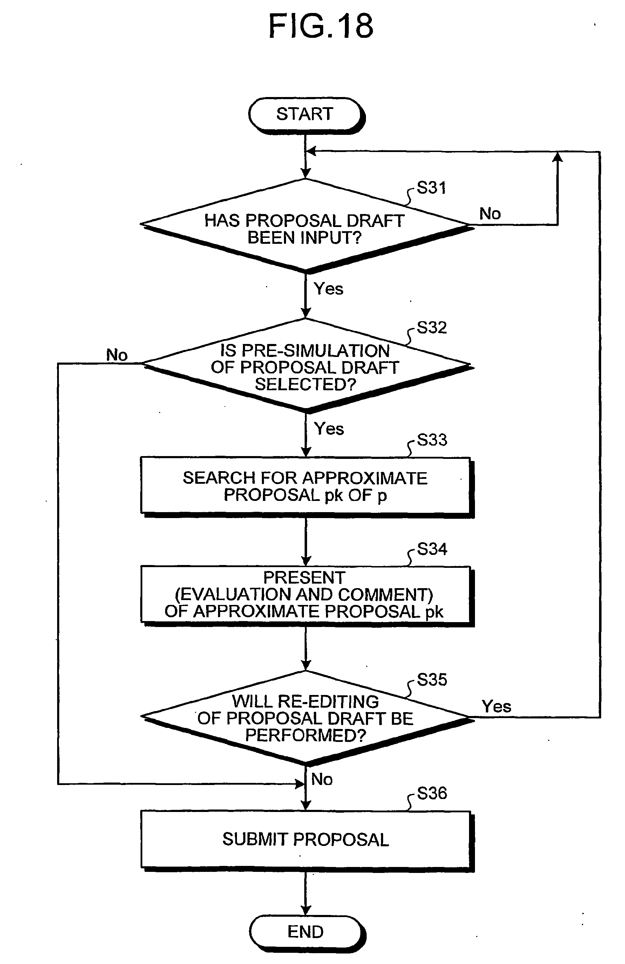

Next, a second embodiment will be described with reference to FIG. 18. The same components as in the first embodiment described above are denoted by the same reference characters and the description thereof will not be repeated.

In the second embodiment, the proposer submits a proposal draft prior to a formal submission of the proposal so that the proposer submits a proposal with higher rate of acceptance, an approximate proposal to the proposal draft is searched for from the proposal history, and evaluation and comment on the proposal draft can be given as a pre-simulation, based on the evaluation result and comment on the approximate proposal found as a result of search.

FIG. 18 is a flowchart of a process sequence of the pre-simulation of the proposal draft. The proposal draft has the same structure as the formal proposal as shown in FIGS. 8 to 10. The pre-simulation is performed on the proposal draft prior to the formal submission of the proposal by the proposer. The proposer can determine whether to perform the pre-simulation or not by selecting a mode in advance.

As shown in FIG. 18, when a proposal draft p is supplied (Yes in step S31), and the pre-simulation to the proposal draft p is selected (Yes in step S32), the approximate proposal of the proposal draft p is searched for according to the technique described according to the first embodiment (step S33).

When a most approximate proposal pk is found as a result of search in step S33, an evaluation and a comment on the approximate proposal pk are presented (step S34). The evaluation is information on whether the approximate proposal pk is accepted or rejected. The comment is a content of the comment by each of those concerned to the approximate proposal pk. Thus, the proposer can confirm necessity of re-edition of the proposal draft p, and check the editing content.

Thereafter, the proposer refers to the evaluation and the comment on the approximate proposal pk. When the proposer determines that there is a need of re-edition and selects re-editing the approximate proposal pk (Yes in step S35), the process returns to S31, where the system stands by for the input of re-edited proposal. Since the pre-simulation can be performed more than once, the re-edited proposal may be subjected to the pre-simulation again.

On the other hand, after the repetition of the process from step S31 to step S34, if it is selected that the re-edition of the approximate proposal pk is not performs (No in step S35), the proposal draft p is formally given as a proposal (step S36).

Here, the pre-simulation may not be performed on the proposal draft p. Then, the pre-simulation is not selected for the proposal draft p (No in step S32) and the proposal draft p is directly submitted (step S36).

Thus, according to the second embodiment, the proposer formulates the proposal draft prior to the formal submission of the proposal, and performs the pre-simulation on the proposal draft. Thus, the dictionary proposer can re-modify the proposal to formulate a proposal which is more easily accepted based on the proposal draft, according to the evaluation and comment given as a result of the pre-simulation, and provides the re-modified and formulated update proposal as a formal proposal, whereby an efficient update (edition and addition) of the dictionary is allowed.

Additional advantages and modifications will readily occur to those skilled in the art. Therefore, the invention in its broader aspects is not limited to the specific details and representative embodiments shown and described herein. Accordingly, various modifications may be made without departing from the scope of the general inventive concept as defined by the appended claims and their equivalents.

## Claims

1. A classification dictionary updating apparatus comprising:

   an update proposal receiving unit that receives a proposal for updating a hierarchical classification dictionary which has a hierarchical structure which includes a class that defines the hierarchical structure, a property that defines a hierarchical class structure, and an attribute that is a detailed information field of the class and the property, and in which a sub classification class inherits a property of an upper classification class;
   a proposal history storing unit (19) that stores the past received proposal;
   an approximate proposal extracting unit that extracts the past received proposal stored by the proposal history storing unit (19) approximate to the latest received proposal; and
   an approximate proposal presenting unit (15) that presents the extracted proposal.

2. The classification dictionary updating apparatus according to claim 1, wherein the proposal presented by the approximate proposal presenting unit (15) contains a content of the proposal received by the update proposal receiving unit, a result of evaluation indicating one of rejection and acceptance of the proposal received by the update proposal receiving unit, a content of a comment on the proposal received by the update proposal receiving unit, and information on a degree of approximation that is a result of calculation of the degree of approximation.

3. The classification dictionary updating apparatus according to claim 1, wherein when the received proposal is a proposal for editing one of an existing class and an existing property, the approximate proposal extracting unit searches the proposal history storing unit (19) for a proposal with a highest degree of approximation based on one of an attribute of the proposal for editing and a content of the proposal for editing to extract a proposal approximate to the proposal for editing.

4. The classification dictionary updating apparatus according to claim 1, wherein when the received proposal is a proposal for adding one of a new class and a new property, the approximate proposal extracting unit searches the proposal history storing unit (19) for a proposal with a highest value of accumulated degree of approximation based on respective attributes of the proposal for adding, to extract a proposal approximate to the proposal for adding.

5. The classification dictionary updating apparatus according to claim 1, wherein when the received proposal is a proposal for adding a new class, the approximate proposal extracting unit searches the proposal history storing unit (19) for a proposal with a highest degree of similarity to a collection of properties of the proposal for adding, to extract a proposal approximate to the proposal for adding.

6. The classification dictionary updating apparatus according to claim 1, further comprising an addition target searching unit (14) that is configured to, when the received proposal is a proposal for adding one of a new class and a new property, advise of an addition target where the proposal for adding is to be added, according to a location of the proposal extracted by the approximate proposal extracting unit.

7. The classification dictionary updating apparatus according to claim 6, wherein when the received proposal is a proposal for adding a new class, the addition target searching unit (14) advises of the addition target according to a hierarchical structure of the proposal found as a result of search based on a part or a whole of properties of the proposal for adding.

8. The classification dictionary updating apparatus according to claim 6, wherein when the received proposal is a proposal for adding a new class, the addition target searching unit (14) advises of the addition target according to a result of comparison between a property of the proposal found as a result of search based on a content of an attribute of the proposal for adding, and a property of the proposal for adding.

9. The classification dictionary updating apparatus according to claim 6, wherein when the received proposal is a proposal for adding a new property, the addition target searching unit (14) advises that a class that defines the proposal approximate to the received proposal is presented as the addition target.

10. The classification dictionary updating apparatus according to claim 1, further comprising a proposal advice presenting unit (16) that is configured to advise of a result of evaluation indicating rejection of the received proposal, when the proposal extracted by the approximate proposal extracting unit is identical with the received proposal.

11. The classification dictionary updating apparatus according to claim 1, further comprising a proposal advice presenting unit (16) that is configured to advise of a result of evaluation of the proposal extracted by the approximate proposal extracting unit as a result of evaluation of the received proposal.

12. The classification dictionary updating apparatus according to claim 10, further comprising an evaluating and commenting unit that makes a dictionary manager evaluate and give comment on the received proposal according to the result of evaluation given as advice.

13. The classification dictionary updating apparatus according to claim 11, further comprising an evaluating and commenting unit that makes a dictionary manager evaluate and give comment on the received proposal according to the result of evaluation given as advice.

14. The classification dictionary updating apparatus according to claim 1, further comprising:

 a history statistics analyzing unit (21) that generates statistics and analyzes a history of the proposals stored in the proposal history storing unit (19); and
 a reuse proposal presenting unit (23) that extracts a proposal to reuse from the proposal history storing unit (19) according to the statistics and the analysis of the history, notifies a proposer of the reuse, and presents the proposal to reuse.

15. The classification dictionary updating apparatus according to claim 14, further comprising a degree-of-attention presenting unit (24) that presents a class, a property, and an attribute with a high degree of attention based on the statistics and the analysis of the history.

16. The classification dictionary updating apparatus according to claim 1, further comprising:

 a proposal draft receiving unit that receives a proposal approximate to a proposal draft;

a simulative approximate proposal extracting unit that makes the proposal extracting unit search for the proposal received by the proposal draft receiving unit; and

a simulative approximate proposal presenting unit that presents the proposal extracted by the simulative approximate proposal extracting unit.

**17.** A computer program product having a computer readable medium including computer-executable programmed instructions for updating a classification dictionary, wherein the instructions, when executed by a computer, cause the computer to perform:

receiving a proposal for updating a hierarchical classification dictionary which has a hierarchical structure which includes a class that defines the hierarchical structure, a property that defines a hierarchical class structure, and an attribute that is a detailed information field of the class and the property, and in which a sub classification class inherits a property of an upper classification class;

storing the received proposal;

extracting a proposal approximate to the received proposal from the proposals already stored; and presenting the extracted proposal.

**18.** A method of updating a classification dictionary, comprising:

receiving a proposal for updating a hierarchical classification dictionary which has a hierarchical structure which includes a class that defines the hierarchical structure, a property that defines a hierarchical class structure, and an attribute that is a detailed information field of the class and the property, and in which a sub classification class inherits a property of an upper classification class;

storing the received proposal;

extracting a proposal approximate to the received proposal from the proposals already stored; and presenting the extracted proposal.

**Patentansprüche**

**1.** Klassifikationswörterbuch-Aktualisierungsvorrichtung, umfassend:

eine Aktualisierungsvorschlag-Empfangseinheit, die einen Vorschlag zum Aktualisieren eines hierarchischen Klassifikationswörterbuchs empfängt, das eine hierarchische Struktur hat, die Folgendes enthält: eine Klasse, die die hierarchische Struktur definiert, eine Eigenschaft, die eine hierarchische Klassenstruktur definiert, und ein Attribut, das ein detailliertes Informationsfeld der Klasse und der Eigenschaft ist und in dem eine Klassifikationsunterklasse eine Eigenschaft einer Klassifikationsoberklasse erbt;

eine Vorschlagsverlauf-Speichereinheit (19), die den vorher empfangenen Vorschlag speichert;

eine Annäherungsvorschlag-Extrahiereinheit, die den von der Vorschlagsverlauf-Speichereinheit (19) gespeicherten vorher empfangenen Vorschlag extrahiert, der dem zuletzt empfangenen Vorschlag angenähert ist; und

eine Annäherungsvorschlag-Präsentiereinheit (15), die den extrahierten Vorschlag präsentiert.

**2.** Klassifikationswörterbuch-Aktualisierungsvorrichtung nach Anspruch 1, worin der von der Annäherungsvorschlag-Präsentiereinheit (15) präsentierte Vorschlag Folgendes enthält: einen Inhalt des von der Aktualisierungsvorschlag-Empfangseinheit empfangenen Vorschlags, ein Auswertungsergebnis, das entweder Ablehnung oder Annahme des von der Aktualisierungsvorschlag-Empfangseinheit empfangenen Vorschlags anzeigt, einen Inhalt eines Kommentars über den von der Aktualisierungsvorschlag-Empfangseinheit empfangenen Vorschlag und Information über einen Annäherungsgrad, der ein Ergebnis einer Berechnung des Annäherungsgrads ist.

**3.** Klassifikationswörterbuch-Aktualisierungsvorrichtung nach Anspruch 1, worin, wenn der empfangene Vorschlag ein Vorschlag zum Editieren entweder einer bestehenden Klasse oder einer bestehenden Eigenschaft ist, die Annäherungsvorschlag-Extrahiereinheit die Vorschlagsverlauf-Speichereinheit (19) auf einen Vorschlag mit einem Höchstgrad an Annäherung durchsucht auf der Basis entweder eines Attributs des Vorschlags zum Editieren oder eines Inhalts des Vorschlags zum Editieren, um einen dem Vorschlag zum Editieren angenäherten Vorschlag zu extrahieren.

**4.** Klassifikationswörterbuch-Aktualisierungsvorrichtung nach Anspruch 1, worin, wenn der empfangene Vorschlag ein Vorschlag zum Hinzufügen entweder einer neuen Klasse oder einer neuen Eigenschaft ist, die Annäherungsvorschlag-Extrahiereinheit die Vorschlagsverlauf-Speichereinheit (19) auf einen Vorschlag mit einem Höchstwert des akkumulierten Annäherungsgrads durchsucht auf der Basis jeweiliger Attribute des Vorschlags zum Hinzufügen, um einen dem Vorschlag zum Hinzufügen angenäherten Vorschlag zu extrahieren.

5. Klassifikationswörterbuch-Aktualisierungsvorrichtung nach Anspruch 1, worin, wenn der empfangene Vorschlag ein Vorschlag zum Hinzufügen einer neuen Klasse ist, die Annäherungsvorschlag-Extrahiereinheit die Vorschlagsverlauf-Speichereinheit (19) auf einen Vorschlag mit einem höchsten Ähnlichkeitsgrad zu einer Sammlung von Eigenschaften des Vorschlags zum Hinzufügen durchsucht, um einen dem Vorschlag zum Hinzufügen angenäherten Vorschlag zu extrahierten.

6. Klassifikationswörterbuch-Aktualisierungsvorrichtung nach Anspruch 1, außerdem eine Hinzufügungsziel-Sucheinheit (14) umfassend, die, wenn der empfangene Vorschlag ein Vorschlag zum Hinzufügen entweder einer neuen Klasse oder einer neuen Eigenschaft ist, dazu konfiguriert ist, über ein Hinzufügungsziel zu informieren, wo der Vorschlag zum Hinzufügen gemäß einem Speicherplatz des von der Annäherungsvorschlag-Extrahiereinheit extrahierten Vorschlags hinzuzufügen ist.

7. Klassifikationswörterbuch-Aktualisierungsvorrichtung nach Anspruch 6, worin, wenn der empfangene Vorschlag ein Vorschlag zum Hinzufügen einer neuen Klasse ist, die Hinzufügungsziel-Sucheinheit (14) über das Hinzufügungsziel informiert gemäß einer hierarchischen Struktur des Vorschlags, der als Ergebnis einer Suche auf der Basis eines Teils oder einer Gesamtheit der Eigenschaften des Vorschlags zum Hinzufügen gefunden wird.

8. Klassifikationswörterbuch-Aktualisierungsvorrichtung nach Anspruch 6, worin, wenn der empfangene Vorschlag ein Vorschlag zum Hinzufügen einer neuen Klasse ist, die Hinzufügungsziel-Sucheinheit (14) über das Hinzufugungsziel informiert gemäß einem Ergebnis eines Vergleichs zwischen einer Eigenschaft des Vorschlags, der als Ergebnis einer Suche auf der Basis eines Inhalts eines Attributs des Vorschlags zum Hinzufügen gefunden wird, und einer Eigenschaft des Vorschlags zum Hinzufügen.

9. Klassifikationswörterbuch-Aktualisierungsvorrichtung nach Anspruch 6, worin, wenn der empfangene Vorschlag ein Vorschlag zum Hinzufügen einer neuen Eigenschaft ist, die Hinzufügungsziel-Sucheinheit (14) informiert, dass eine Klasse als das Hinzufügungsziel präsentiert wird, die den an den empfangenen Vorschlag angenäherten Vorschlag definiert.

10. Klassifikationswörterbuch-Aktualisierungsvorrichtung nach Anspruch 1, außerdem eine Vorschlagempfehlungs-Präsentiereinheit (16) umfassend, die dazu konfiguriert ist, über ein Auswertungsergebnis zu informieren, das die Ablehnung des empfangenen Vorschlags anzeigt, wenn der von der Annäherungsvorschlag-Extrahiereinheit extrahierte Vorschlag mit dem empfangenen Vorschlag identisch ist.

11. Klassifikationswörterbuch-Aktualisierungsvorrichtung nach Anspruch 1, außerdem eine Vorschlagempfehlungs-Präsentiereinheit (16) umfassend, die dazu konfiguriert ist, über ein Auswertungsergebnis des Vorschlags zu informieren, der von der Annäherungsvorschlag-Extrahiereinheit als ein Ergebnis der Auswertung des empfangenen Vorschlags extrahiert wird.

12. Klassifikationswörterbuch-Aktualisierungsvorrichtung nach Anspruch 10, außerdem eine auswertende und kommentierende Einheit umfassend, die einen Wörterbuch-Manager veranlasst, den empfangenen Vorschlag gemäß dem als Empfehlung gegebenen Auswertungsergebnis auszuwerten und zu kommentieren.

13. Klassifikationswörterbuch-Aktualisierungsvorrichtung nach Anspruch 11, außerdem eine auswertende und kommentierende Einheit umfassend, die einen Wörterbuch-Manager veranlasst, den empfangenen Vorschlag gemäß dem als Empfehlung gegebenen Auswertungsergebnis auszuwerten und zu kommentieren.

14. Klassifikationswörterbuch-Aktualisierungsvorrichtung nach Anspruch 1, außerdem umfassend:

    eine Verlaufstatistik-Analysiereinheit (21), die Statistik erzeugt und einen Verlauf der in der Vorschlagsverlauf-Speichereinheit (19) gespeicherten Vorschläge analysiert; und
    eine Wiederverwendungsvorschlag-Präsentiereinheit (23), die einen Vorschlag zur Wiederverwendung gemäß der Statistik und der Analyse des Verlaufs aus der Vorschlagsverlauf-Speichereinheit (19) extrahiert, einem Vorschlagenden die Wiederverwendung meldet und den Vorschlag zur Wiederverwendung präsentiert.

**15.** Klassifikationswörterbuch-Aktualisierungsvorrichtung nach Anspruch 14, außerdem eine Beachtungsgrad-Präsentiereinheit (24) umfassend, die eine Klasse, eine Eigenschaft und ein Attribut mit einem hohen Beachtungsgrad auf der Basis der Statistik und der Analyse des Verlaufs präsentiert.

**16.** Klassifikationswörterbuch-Aktualisierungsvorrichtung nach Anspruch 1, außerdem umfassend:

eine Vorschlagsentwurf-Empfangseinheit, die einen einem Vorschlagsentwurf angenäherten Vorschlag empfängt;
eine simulative Annäherungsvorschlag-Extrahiereinheit, die verursacht, dass die Vorschlag-Extrahiereinheit den von der Vorschlagsentwurf-Empfangseinheit empfangenen Vorschlag sucht; und
eine simulative Annäherungsvorschlag-Präsentiereinheit, die den von der simulativen Annäherungsvorschlag-Extrahiereinheit extrahierten Vorschlag präsentiert.

**17.** Computerprogrammprodukt mit einem computerlesbaren Medium, das computerausführbare programmierte Anleitungen zum Aktualisieren eines Klassifikationswörterbuchs enthält, worin die Anleitungen bei Ausführung auf einem Computer verursachen, dass der Computer Folgendes ausführt:

Empfangen eines Vorschlags zum Aktualisieren eines hierarchischen Klassifikationswörterbuchs, das eine hierarchische Struktur hat, die Folgendes enthält: eine Klasse, die die hierarchische Struktur definiert, eine Eigenschaft, die eine hierarchische Klassenstruktur definiert, und ein Attribut, das ein detailliertes Informationsfeld der Klasse und der Eigenschaft ist und in dem eine Klassifikationsunterklasse eine Eigenschaft einer Klassifikationsoberklasse erbt;
Speichern des empfangenen Vorschlags;
Extrahieren eines dem empfangenen Vorschlag angenäherten Vorschlags aus den schon gespeicherten Vorschlägen; und
Präsentieren des extrahierten Vorschlags.

**18.** Verfahren zum Aktualisieren eines Klassifikationswörterbuchs, umfassend:

Empfangen eines Vorschlags zum Aktualisieren eines hierarchischen Klassifikationswörterbuchs, das eine hierarchische Struktur hat, die Folgendes enthält: eine Klasse, die die hierarchische Struktur definiert, eine Eigenschaft, die eine hierarchische Klassenstruktur definiert, und ein Attribut, das ein detailliertes Informationsfeld der Klasse und der Eigenschaft ist und in dem eine Klassifikationsunterklasse eine Eigenschaft einer Klassifikationsoberklasse erbt;
Speichern des empfangenen Vorschlags;
Extrahieren eines dem empfangenen Vorschlag angenäherten Vorschlags aus den schon gespeicherten Vorschlägen; und
Präsentieren des extrahierten Vorschlags.

**Revendications**

**1.** Dispositif de mise à jour de dictionnaire de classification comprenant :

une unité de réception de proposition de mise à jour qui reçoit une proposition pour mettre à jour un dictionnaire de classification hiérarchique qui a une structure hiérarchique qui comprend une classe qui définit la structure hiérarchique, une propriété qui définit une structure de classe hiérarchique, et un attribut qui est un champ d'informations détaillées de la classe et de la propriété, et dans lequel une classe de sous-classification hérite d'une propriété d'une classe de classification supérieure ;
une unité de mémorisation d'historique de propositions (19) qui mémorise la proposition reçue passée ;
une unité d'extraction de proposition approximative qui extrait la proposition reçue passée mémorisée par l'unité de mémorisation d'historique de propositions (19) proche de la dernière proposition reçue ; et
une unité de présentation de proposition approximative (15) qui présente la proposition extraite.

**2.** Dispositif de mise à jour de dictionnaire de classification selon la revendication 1, dans lequel la proposition présentée par l'unité de présentation de proposition approximative (15) contient un contenu de la proposition reçue par l'unité de réception de proposition de mise à jour, un résultat d'évaluation indiquant l'un d'un rejet et d'une acceptation de la proposition reçue par l'unité de réception de proposition de mise à jour, un contenu d'un commentaire concernant la proposition reçue par l'unité de réception de proposition de mise à jour, et des informatisons concernant un degré d'approximation qui est un résultat de calcul du degré d'approximation.

**3.** Dispositif de mise à jour de dictionnaire de classification selon la revendication 1, dans lequel, lorsque la proposition reçue est une proposition pour éditer l'une d'une classe existante et d'une propriété existante, l'unité d'extraction de proposition approximative recherche dans l'unité de mémorisation d'historique de propositions (19) une proposition avec un degré le plus élevé d'approximation sur la base de l'un d'un attribut de la proposition pour éditer et d'un contenu de la proposition pour éditer pour extraire une proposition proche de la proposition pour éditer.

**4.** Dispositif de mise à jour de dictionnaire de classification selon la revendication 1, dans lequel, lorsque la proposition reçue est une proposition pour ajouter l'une d'une nouvelle classe et d'une nouvelle propriété, l'unité d'extraction de proposition approximative recherche dans l'unité de mémorisation d'historique de propositions (19) une proposition avec une valeur la plus élevée de degré accumulé d'approximation sur la base des attributs respectifs de la proposition pour ajouter, pour extraire une proposition proche de la proposition pour ajouter.

**5.** Dispositif de mise à jour de dictionnaire de classification selon la revendication 1, dans lequel, lorsque la proposition reçue est une proposition pour ajouter une nouvelle classe, l'unité d'extraction de proposition approximative recherche dans l'unité de mémorisation d'historique de propositions (19) une proposition avec un degré le plus élevé de similarité avec un ensemble de propriétés de la proposition pour ajouter, pour extraire une proposition proche de la proposition pour ajouter.

**6.** Dispositif de mise à jour de dictionnaire de classification selon la revendication 1, comprenant en outre une unité de recherche de cible d'ajout (14) qui est configurée pour, lorsque la proposition reçue est une proposition pour ajouter l'une d'une nouvelle classe et d'une nouvelle propriété, informer d'une cible d'ajout où la proposition pour ajouter doit être ajoutée, conformément à un emplacement de la proposition extraite par l'unité d'extraction de proposition approximative.

**7.** Dispositif de mise à jour de dictionnaire de classification selon la revendication 6, dans lequel, lorsque la proposition reçue est une proposition pour ajouter une nouvelle classe, l'unité de recherche de cible d'ajout (14) informé de la cible d'ajout conformément à une structure hiérarchique de la proposition trouvée en tant que résultat d'une recherche basée sur une partie ou la totalité des propriétés de la proposition pour ajouter.

**8.** Dispositif de mise à jour de dictionnaire de classification selon la revendication 6, dans lequel, lorsque la proposition reçue est une proposition pour ajouter une nouvelle classe, l'unité de recherche de cible d'ajout (14) informe de la cible d'ajout conformément à un résultat de comparaison entre une propriété de la proposition trouvée en tant que résultat d'une recherche basée sur un contenu d'un attribut de la proposition pour ajouter et une propriété de la proposition pour ajouter,

**9.** Dispositif de mise à jour de dictionnaire de classification selon la revendication 6, dans lequel, lorsque la proposition reçue est une proposition pour ajouter une nouvelle propriété, l'unité de recherche de cible d'ajout (14) informe qu'une classe qui définit la proposition proche de la proposition reçue soit présentée en tant que cible d'ajout.

**10.** Dispositif de mise à jour de dictionnaire de classification selon la revendication 1, comprenant en outre une unité de présentation de conseil de proposition (16) qui est configurée pour informer d'un résultat d'évaluation indiquant le rejet de la proposition reçue, lorsque la proposition extraite par l'unité d'extraction de proposition approximative est identique à la proposition reçue.

**11.** Dispositif de mise à jour de dictionnaire de classification selon la revendication 1, comprenant en outre une unité de présentation de conseil de proposition (16) qui est configurée pour informer d'un résultat d'évaluation de la proposition extraite par l'unité d'extraction de proposition approximative en tant que résultat d'évaluation de la proposition reçue.

**12.** Dispositif de mise à jour de dictionnaire de classification selon la revendication 10, comprenant en outre une unité d'évaluation et de commentaire qui amène un gestionnaire de dictionnaire à évaluer et à donner un commentaire concernant la proposition reçue conformément au résultat d'évaluation donné en tant que conseil.

**13.** Dispositif de mise à jour de dictionnaire de classification selon la revendication 11, comprenant en outre une unité d'évaluation et de commentaire qui amène un gestionnaire de dictionnaire à évaluer et à donner un commentaire concernant la proposition reçue conformément au résultat d'évaluation donné en tant que conseil.

**14.** Dispositif de mise à jour de dictionnaire de classification selon la revendication 1, comprenant en outre :

une unité d'analyse de statistiques d'historique (21) qui génère des statistiques et analyse un historique des propositions mémorisées dans l'unité de mémorisation d'historique de propositions (19) ; et
une unité de présentation de proposition de réutilisation (23) qui extrait une proposition de réutilisation de l'unité de mémorisation d'historique de propositions (19) conformément aux statistiques et à l'analyse de l'historique, informé un auteur de la réutilisation, et présente la proposition de réutilisation.

**15.** Dispositif de mise à jour de dictionnaire de classification selon la revendication 14, comprenant en outre une unité de présentation de degré d'attention (24) qui présente une classe, une propriété et un attribut avec un degré élevé d'attention sur la base des statistiques et de l'analyse d'historique.

**16.** Dispositif de mise à jour de dictionnaire de classification selon la revendication 1, comprenant en outre :

une unité de réception de version préliminaire de proposition qui reçoit une proposition proche d'une version préliminaire de proposition ;
une unité d'extraction de proposition approximative de simulation qui amène l'unité d'extraction de proposition à rechercher la proposition reçue par l'unité de réception de version préliminaire de proposition ; et
une unité de présentation de proposition approximative de simulation qui présente la proposition extraite par l'unité d'extraction de proposition approximative de simulation.

**17.** Produit-programme d'ordinateur comportant un support pouvant être lu par un ordinateur comprenant des instructions programmées exécutables par un ordinateur pour mettre à jour un dictionnaire de classification, dans lequel les instructions, lorsqu'elles sont exécutées par un ordinateur, amènent l'ordinateur à :

recevoir une proposition pour mettre à jour un dictionnaire de classification hiérarchique qui a une structure hiérarchique qui comprend une classe qui définit la structure hiérarchique, une propriété qui définit une structure de classe hiérarchique, et un attribut qui est un champ d'informations détaillées de la classe et de la propriété, et dans lequel une classe de sous-classifcation hérite d'une propriété d'une classe de classification supérieure ;
mémoriser la proposition reçue ;
extraire une proposition proche de la proposition reçue des propositions déjà mémorisées ; et
présenter la proposition extraite.

**18.** Procédé de mise à jour d'un dictionnaire de classification, consistant à :

recevoir une proposition pour mettre à jour un dictionnaire de classification hiérarchique qui a une structure hiérarchique qui comprend une classe qui définit la structure hiérarchique, une propriété qui définit une structure de classe hiérarchique, et un attribut qui est un champ d'informations détaillées de la classe et de la propriété, et dans lequel une classe de sous-classification hérite d'une propriété d'une classe de classification supérieure ;
mémoriser la proposition reçue ;
extraire une proposition proche de la proposition reçue des propositions déjà mémorisées ; et
présenter la proposition extraite.

# FIG.1

EP 1 875 388 B1

DICTIONARY      CONTENT

Universal root

**A0**
| P0 |

**B0**
| P0 |
| P1 |

**C0**
| P0 |
| P1 |
| P2 |

| P0 | P1 | P2 |
|----|----|----|
| x1 | y1 | z1 |
| x1 | y2 | z2 |
| x2 | y2 | z2 |

~111

**C1**
| P0 |
| P1 |
| P3 |

| P0 | P1 | P3 |
|----|----|----|
| x1 | y1 | m1 |
| x1 | y2 | m2 |
| x2 | y2 | m3 |

~112

**B1**
| P0 |
| P4 |

**C2**
| P0 |
| P4 |
| P5 |

| P0 | P4 | P5 |
|----|----|----|
| x1 | n1 | k1 |
| x1 | n2 | k2 |
| x2 | n2 | k3 |

~113

**D1**
| P7 |

**C3**
| P0 |
| P4 |
| P6 |
| P7 |

| P0 | P4 | P6 | P7 |
|----|----|----|----|
| x1 | n1 | r1 | w1 |
| x1 | n2 | r2 | w2 |
| x2 | n2 | r3 | w3 |

~114

( PRODUCT CLASS )   | PROPERTY |   | CONTENT |

# FIG.2

DICTIONARY

CONTENT

| A0 |
|----|
| P0 |

| B0 |
|----|
| P0 |
| P1 |

| C0 |
|----|
| P0 |
| P1 |
| P2 |

| P0 | P1 | P2 |
|----|----|----|
| x1 | y1 | z1 |
| x1 | y2 | z2 |
| x2 | y2 | z2 |

121

| C1 |
|----|
| P0 |
| P1 |
| P3 |

| P0 | P1 | P3 |
|----|----|----|
| x1 | y1 | m1 |
| x1 | y2 | m2 |
| x2 | y2 | m3 |

122

| B1 |
|----|
| P0 |
| P4 |

| C2 |
|----|
| P0 |
| P4 |
| P5 |

| P0 | P4 | P5 |
|----|----|----|
| x1 | n1 | k1 |
| x1 | n2 | k2 |
| x2 | n2 | k3 |

123

| C3 |
|----|
| P0 |
| P4 |
| P6 |
| P7 |

| P0 | P4 | P6 | P7 |
|----|----|----|----|
| x1 | n1 | r1 | r1 |
| x1 | n2 | r2 | r2 |
| x2 | n2 | r3 | r3 |

124

( PRODUCT CLASS )   | PROPERTY |   | CONTENT |

# FIG.3

| Attribute | Add | Modify | Delete | Obligation |
|---|---|---|---|---|
| code | – | X | X | M |
| superclass | V | V | V | O |
| preferred name | – | R | X | M |
| short name | – | R | X | M |
| visible types | V | V | X | O |
| applicable types | V | V | X | O |
| class selection properties | V | V | X | O |
| synonymous name | R | R | R | O |
| visible properties | V | V | X | O |
| applicable properties | V | V | X | O |
| class value assignment | V | V | X | O |
| definition | – | R | X | M |
| source document of definition | R | R | R | O |
| note | R | R | R | O |
| remark | R | R | R | O |
| simplified drawing | – | R | R | O |
| date of original definition | – | X | X | M |
| date of current version | – | V | X | M |
| date of current revision | – | R / V | X | M |
| version number | – | V | X | M |
| revision number | – | R | X | M |

ALLOWABILITY OF
MODIFICATION OF CLASS

DESCRIPTION OF SYMBOLS

-: IMPOSSIBLE
R: STEP-UP OF REVISION
V: STEP-UP OF VERSION
X: IMPOSSIBLE/FORBIDDEN ITEM
R/V: R OR V DEPENDING ON CONTENT
X/R: X OR R DEPENDING ON CONTENT

EP 1 875 388 B1

# FIG.4

| Attribute | Add | Modify | Delete | Obligation |
|---|---|---|---|---|
| code | – | X | X | M |
| · definition class | X | X | X | M |
| data type | – | V | X | M |
| preferred name | – | R | X | M |
| short name | – | R | X | M |
| preferred letter symbol | R | R | X | O |
| synonymous letter symbol | R | R | R | O |
| synonymous name | R | R | R | O |
| property type classification | – | R | X | O |
| definition | – | R / V | X | M |
| source document of definition | R | R | R | O |
| note | R | R | R | O |
| remark | R | R | R | O |
| unit | – | X | X | M |
| condition | X | X / R | X | M |
| formula | R | R | R | O |
| format | – | X | X | M |
| date of current revision | – | V | X | M |
| date of current version | – | R / V | X | M |
| date of current revision | – | V | X | M |
| version number | – | R | X | M |
| revision number | – | V | X | M |

ALLOWABILITY OF
MODIFICATION OF PROPERTY

DESCRIPTION OF SYMBOLS

-: IMPOSSIBLE
R: STEP-UP OF REVISION
V: STEP-UP OF VERSION
X: IMPOSSIBLE/FORBIDDEN ITEM
R/V: R OR V DEPENDING ON CONTENT
X/R: X OR R DEPENDING ON CONTENT

EP 1 875 388 B1

# FIG.5

CLIENT TERMINAL 3

NETWORK 2

SERVER 1

CLIENT TERMINAL 3

# FIG.6

CPU 101

ROM 102

RAM 103

BUS CONTROLLER 109

HDD 104

MEDIA DRIVE 105

110

INPUT DEVICE 108

COMMUNICATION CONTROLLING DEVICE 106

2

DISPLAY DEVICE 107

# FIG.7

EP 1 875 388 B1

# FIG.8

EP 1 875 388 B1

| PROPOSAL NUMBER | code | definition | prefname | definition class | shortname | data type | unit | ... | COMMENT REFERENCE | EVALUATION |
|---|---|---|---|---|---|---|---|---|---|---|
| 100 | Code1 | Def1 | prefname1 | class1 | Shortname1 | String | | | COMMENT | accepted |
| 101 | Code2 | Def2 | prefname2 | class2 | Shortname2 | real | Km | | COMMENT | rejected |
| 102 | Code3 | Def3 | prefname3 | class3 | Shortname3 | String | | | | |

py

# FIG.9

| PROPOSAL NUMBER | code | super class | preferred name | short name | definition class | synonymous name | ... | COMMENT REFERENCE | EVALUATION |
|---|---|---|---|---|---|---|---|---|---|
| 1 | classbsu1 | Root | Classbsu1 prefname | S1 | definition1 | synonymous1 | | COMMENT | accepted |
| 2 | classbsu2 | classbsu1 | Classbsu2 prefname | S2 | definition2 | {syn2, syn3} | | COMMENT | rejected |
| 3 | classbsu3 | classbsu1 | Classbsu3 prefname | S3 | definition3 | {syn4,syn5,syn6} | | COMMENT | rejected |

# FIG.10

EP 1 875 388 B1

| PROPOSAL NUMBER | PROPOSAL ATTRIBUTE NAME | PROPOSAL CONTENT | PROPOSAL TARGET REFERENCE | PROPOSAL CLASSIFI CATION | LEVEL | COMMENT REFERENCE | EVALUATION |
|---|---|---|---|---|---|---|---|
| 1 | preferred name | New preferred name | JEMIMA_C00001 | edit | High | CONTENT | accepted |
| 2 | definition | definition2 | JEMIMA_C00012 | Technical proposal | High | CONTENT | rejected |

px

# FIG.11

START

S1
IS PROPOSAL CONFORMED TO PLIB DEFINITION?
No

Yes

S2
IS PROPOSAL EDITION PROPOSAL OR ADDITION PROPOSAL?
EDITION PROPOSAL

S3
SEARCH FOR APPROXIMATE PROPOSAL ACCORDING TO CONTENT OF PROPOSAL (APPROXIMATE PROPOSAL SEARCHING METHOD 1)

ADDITION PROPOSAL

S4
IS PROPOSAL CLASS PROPOSAL OR PROPERTY PROPOSAL?
PROPERTY PROPOSAL

CLASS PROPOSAL

S6
WHICH OF APPROXIMATE PROPOSAL SEARCHING METHOD 2 AND 3 IS SELECTED?
2

S5
SEARCH FOR APPROXIMATE PROPOSAL ACCORDING TO SUMMATION OF DEGREES OF APPROXIMATION OF RESPECTIVE ATTRIBUTES (APPROXIMATE PROPOSAL SEARCHING METHOD 2)

3

S7
SEARCH FOR APPROXIMATE PROPOSAL ACCORDING TO PROPERTY (APPROXIMATE PROPOSAL SEARCHING METHOD 3)

S8
PRESENT APPROXIMATE PROPOSAL

END

# FIG.12

| PROPOSAL NUMBER | PROPOSAL ATTRIBUTE NAME | PROPOSAL TARGET REFERENCE | PROPOSAL CONTENT | PROPOSAL CLASSIFI-CATION | LEVEL | COMMENT REFERENCE | EVALUATION | DEGREE OF APPROXI-MATION |
|---|---|---|---|---|---|---|---|---|
| 11 | definition | JEMIMA_C00012 | definition2 | edit | High | COMMENT | accepted | 95% |
| 23 | definition | JEMIMA_C00012 | definition3 | Technical proposal | High | COMMENT | rejected | 50% |

EP 1 875 388 B1

EP 1 875 388 B1

# FIG.13

| PROPOSAL NUMBER | PROPERTY | code | definition | prefname | definition | shortname | data | unit | COMMENT REFERENCE | EVALUATION | DEGREE OF APPROXI- MATION |
|---|---|---|---|---|---|---|---|---|---|---|---|
| 100 | p4 | Code1 | Def1 | prefname1 | class1 | Shortname | String | | COMMENT | accepted | 80% |
| 102 | p3 | Code3 | Def1 | prefname3 | class3 | Shortname | String | | COMMENT | rejected | 60% |

# FIG.14

```
                    ┌──────────┐
                    │  START   │
                    └─────┬────┘
                          │
                          ▼                      S11
                  ◇ DOES CLASS         ◇
                  cls_a EXIST THAT HAS ALL ──── No ──┐
                    PROPERTIES OF Cx?              │
                          │                        │
                         Yes            S12        │
                          ▼                        │
              ┌──────────────────────────┐         │
              │ DETERMINE cls_a AS CANDIDATE │      │
              │  OF APPROXIMATE PROPOSAL  │         │
              └──────────┬───────────────┘         │
                         │                          ▼                    S13
                         │              ┌──────────────────────────┐
                         │              │ SEARCH FOR CLASS (cls_list) │
                         │              │    INCLUDING MANY          │
                         │              │    PROPERTIES OF Cx        │
                         │              └──────────┬───────────────┘
                         │                         ▼              S14
                         │                  ◇ DOES NEW CLASS Cx HAS ◇ ── No ──┐    S15
                         │                     NEW PROPERTY?                   ▼
                         │                         │              ┌──────────────────┐
                         │                        Yes             │ DETERMINE cls_list │
                         │                         ▼      S16      │ AS CANDIDATE OF   │
                         │          ┌──────────────────────────┐  │  APPROXIMATE      │
                         │          │ DETERMINE APPROXIMATE     │  │  PROPOSAL         │
                         │          │ PROPOSAL OF NEW PROPERTY  │  └──────────────────┘
                         │          │ AND SEARCH FOR CLASS cls_p│
                         │          │ THAT DEFINES APPROXIMATE  │
                         │          │    PROPOSAL               │
                         │          └──────────┬───────────────┘
                         │                     ▼              S17
                         │    ┌── No ── ◇ IS cls_p DEFINED BY cls_list ◇
                         │    │         S19     AND SUB CLASS?
                         │    ▼                     │
              ┌──────────────────┐                Yes            S18
              │ SET cls_p AND cls_list│            ▼
              │ AS CANDIDATES OF  │    ┌──────────────────────────┐
              │  APPROXIMATE      │    │ DETERMINE PERTINENT CLASS │
              │  PROPOSAL         │    │   TO BE CANDIDATE OF       │
              └──────────┬───────┘    │  APPROXIMATE PROPOSAL      │
                         │            └──────────┬───────────────┘
                         │                       │
                         └───────────┬───────────┘
                                     ▼
                               ┌──────────┐
                               │   END    │
                               └──────────┘
```

FIG.15

# FIG.16

EP 1 875 388 B1

UNTITLED DOCUMENT- Microsoft Internet Explorer

| FILE | EDIT | VIEW | FAVORITE | TOOL | HELP |

RESULT OF EVALUATION ON APPROXIMATE PROPOSALS : accept

LIST OF COMMENT ON APPROXIMATE PROPOSALS

·comment 1 details
·comment 2 details
·comment 3 details

DONE

MY COMPUTER

# FIG.17

START

↓

MAKE PROPOSAL
EVALUATED  ⌐S21  REJECT

ACCEPT

↓

IS IT EDITION PROPOSAL?  ⌐S22  No

Yes

⌐S23

DETERMINE PROPOSAL LEVEL
AND PROPOSAL CLASSIFICATION

↓

END

# FIG.18

```
                    ┌──────────┐
                    │  START   │
                    └──────────┘
                         │
                         ▼
                    ╱ S31 ╲
              ╱ HAS PROPOSAL DRAFT ╲  No
              ╲   BEEN INPUT?   ╱───────┐
                    ╲   ╱                │
                     │ Yes               │
                     ▼                   │
                   ╱ S32 ╲               │
           No ╱ IS PRE-SIMULATION ╲      │
         ┌─────╲ OF PROPOSAL DRAFT ╱     │
         │      ╲  SELECTED?  ╱          │
         │          │ Yes                │
         │          ▼                    │
         │   ┌──────────────────┐ S33    │
         │   │ SEARCH FOR        │       │
         │   │ APPROXIMATE       │       │
         │   │ PROPOSAL pk OF p  │       │
         │   └──────────────────┘        │
         │          │                    │
         │          ▼                    │
         │   ┌──────────────────┐ S34    │
         │   │ PRESENT          │        │
         │   │ (EVALUATION AND  │        │
         │   │ COMMENT) OF      │        │
         │   │ APPROXIMATE      │        │
         │   │ PROPOSAL pk      │        │
         │   └──────────────────┘        │
         │          │                    │
         │          ▼                    │
         │       ╱ S35 ╲          Yes    │
         │  ╱ WILL RE-EDITING ╲──────────┘
         │  ╲ OF PROPOSAL DRAFT ╱
         │  ╲ BE PERFORMED? ╱
         │       │ No
         └───────┤
                 ▼
          ┌──────────────┐ S36
          │ SUBMIT       │
          │ PROPOSAL     │
          └──────────────┘
                 │
                 ▼
            ┌──────────┐
            │   END    │
            └──────────┘
```

**REFERENCES CITED IN THE DESCRIPTION**

**Patent documents cited in the description**

- JP 2005130209 A
- JP 2004177996 A
- JP 2004178015 A